(19) Europäisches Patentamt
European Patent Office
Office européen des brevets

(11) **EP 4 336 383 A1**

(12) **EUROPEAN PATENT APPLICATION**
published in accordance with Art. 153(4) EPC

(43) Date of publication:
**13.03.2024 Bulletin 2024/11**

(51) International Patent Classification (IPC):
**G06F 16/9535** (2019.01)

(21) Application number: **22814826.8**

(22) Date of filing: **28.03.2022**

(86) International application number:
**PCT/CN2022/083334**

(87) International publication number:
**WO 2022/252779 (08.12.2022 Gazette 2022/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.05.2021 CN 202110604199**
**20.08.2021 CN 202110963155**

(71) Applicant: **Huawei Technologies Co., Ltd.**
**Longgang**
**Shenzhen, Guangdong 518129 (CN)**

(72) Inventors:
• **FANG, Rongjie**
  **Shenzhen, Guangdong 518129 (CN)**
• **ZHUO, Xiaoyan**
  **Shenzhen, Guangdong 518129 (CN)**
• **GAO, Xiangyu**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **SERVICE RECOMMENDATION METHOD AND DEVICE**

(57)     Embodiments of this application disclose a service recommendation method and an apparatus in the field of artificial intelligence. The method includes: After being triggered to start a service recommendation procedure, an electronic device obtains a plurality of to-be-recommended services. Each to-be-recommended service is indicated by a card of at least one size, and a size of a card indicating a rich information service or a direct service is greater than a size of a card indicating an application service. In the solution provided in embodiments of this application, the electronic device may have a plurality of candidate patterns, and select, based on historical click-through rates of the plurality of to-be-recommended services and sizes of display areas included in the plurality of candidate patterns, a target pattern from the plurality of candidate patterns for display. According to the solution provided in embodiments of this application, a probability that the rich information service or the direct service is recommended for display can be improved, so that a service that better meets a user requirement is recommended to a user, and complex operations of the user are reduced.

Obtain a plurality of to-be-recommended services when a first condition is met — 1401

Select, based on historical click-through rates of the to-be-recommended services and sizes of display areas included in a plurality of candidate patterns, a target pattern from the plurality of candidate patterns for display — 1402

FIG. 14

EP 4 336 383 A1

**Description**

This application claims priorities to Chinese Patent Application No. 202110604199.9, filed with the China National Intellectual Property Administration on May 31, 2021 and entitled "SERVICE RECOMMENDATION METHOD AND DEVICE", and to Chinese Patent Application No. CN202110963155.5, filed with the China National Intellectual Property Administration on August 20, 2021 and entitled "SERVICE RECOMMENDATION METHOD AND DEVICE", which are incorporated herein by reference in their entireties.

**TECHNICAL FIELD**

Embodiments of this application relate to the field of service recommendation in the field of artificial intelligence technologies, and specifically, to a service recommendation method and a device.

**BACKGROUND**

With continuous development of electronic technologies and computer technologies, terminals such as a mobile phone, a tablet computer, and an intelligent wearable device have been popularized. A terminal may implement corresponding functions by using various services provided by applications. When a user needs to use a function of an application, for example, view ticket booking information in an application A, the user needs to perform complex operations such as autonomously searching for the corresponding application and opening a related function interface of the application by performing a plurality of operations. How to recommend a service that better meets a user requirement to the user is an urgent problem to be resolved.

**SUMMARY**

Embodiments of this application disclose a service recommendation method and a device. A device to which the service recommendation method provided in embodiments of this application is applied can recommend a service that better meets a user requirement to a user, to reduce complex operations of the user.

A first aspect of embodiments of this application provides a service recommendation method. The method may be performed by an electronic device, or may be performed by a component (for example, a processor, a chip, or a chip system) of the electronic device. The method includes: obtaining a plurality of to-be-recommended services when a first condition is met, where the plurality of to-be-recommended services include at least one of a rich information service, a direct service, or an application service. The application service is a third-party application (Application, APP). Each application service may further include a plurality of subservices. In embodiments of this application, a service that can be obtained and used by a user through single tapping in these subservices is referred to as a direct service. Except that the subservices included in the application services are direct services, direct services may further include some services that can be used through tapping without downloading or installation, for example, a ride code service. The rich information service is a service that directly displays information. The rich information service is used to provide an information display service for a user. The user can obtain information by browsing the rich information service. Each to-be-recommended service is indicated by a card of at least one size, and a size of a card indicating a rich information service or a direct service is greater than a size of a card indicating an application service. For example, the rich information service is indicated by a card of a size 2*2, or may be indicated by a card of a size 1*2; the direct service is indicated by a card of a size 1 *2; and the application service is indicated by a card of a size 1*1. The method further includes: selecting, based on historical click-through rates of the plurality of to-be-recommended services and sizes of display areas included in a plurality of candidate patterns, a target pattern from the plurality of candidate patterns for display. It can be learned from the first aspect that in the solution provided in embodiments of this application, a plurality of patterns are provided, and each pattern may be filled with cards of different sizes, to indicate different types of services. When the target pattern is selected from the plurality of candidate patterns, not only the historical click-through rates of the services are considered, but also the sizes of the display areas in the candidate patterns are additionally considered. According to the solution provided in embodiments of this application, even if a historical click-through rate of an added direct service or rich information service is low, because a size of a display area is large, a candidate pattern of a card of the added direct service or rich information service may be selected as the target pattern for display, to improve a probability that the rich information service or the direct service is displayed, and improve user experience.

In a possible implementation of the first aspect, a same type of to-be-recommended services correspond to different sizes, and a to-be-recommended service displayed in the target pattern is a to-be-recommended service that matches a size of each display area in the target pattern. In other words, a target to-be-recommended service is added to the display area. The target to-be-recommended service is obtained, based on a historical click-through rate of the to-be-recommended service, from a to-be-recommended service indicated by a target card, and the target card is a card that has a same size as the display area in cards.

In a possible implementation of the first aspect, the selecting, based on historical click-through rates of the plurality of to-be-recommended services and sizes of display areas included in a plurality of candidate patterns, a target pattern from the plurality of candidate patterns for display includes: obtaining a score of each candidate pattern in the plurality of candidate patterns, where a positive correlation factor of the score of the candidate pattern is a size of a display area included in the candidate pattern, another positive correlation factor of the score of the candidate pattern is a score of a to-be-added service in the display area, and the score of the to-be-added service is positively correlated with a historical click-through rate; and selecting a candidate pattern with a highest score from the plurality of candidate patterns as the target pattern for display. In this implementation, the score of each candidate pattern is calculated to display the candidate pattern with the highest score. When the score of the candidate pattern is calculated, not only a historical click-through rate is considered, but also a size of each display area in the candidate pattern is additionally considered. In other words, a size of a card indicating each service is additionally considered. In this way, for a service indicated by a large-size card, for example, a rich information service or a direct service, even if a historical click-through rate is low, because the corresponding size is large, a final score of a candidate pattern in which the service is located can be improved. In a possible implementation of the first aspect, a negative correlation factor of a score of each rich information service in target to-be-recommended services is a historical exposure rate of each rich information service. In this implementation, considering that the rich information service directly displays information to a user, as the exposure rate of the rich information service increases, there is a high probability that the user has obtained the information displayed by the rich information service. Therefore, the negative correlation factor of the score of each rich information service is the historical exposure rate of each rich information service. Longer exposure time indicates a lower score of the rich information service, and a probability that the rich information service is displayed is reduced.

In a possible implementation of the first aspect, the method further includes: obtaining a training sample based on historical data, where the historical data is data generated when a user performs an operation on each to-be-recommended service historically. A first model is trained by using the training sample, the first model is used to predict a probability that a user performs an operation on each to-be-recommended service currently, and another positive correlation factor of the score of each to-be-recommended service is the probability, predicted by using the first model, that the user performs an operation on each to-be-recommended service currently. In this implementation, to make a service recommended by the electronic device better meet a real requirement of the user, a service that may be currently tapped by the user may be further predicted by using a model. A probability, predicted by using the model, that the user uses each to-be-recommended service currently and a historical click-through rate of each to-be-recommended service may be weighted, to obtain the score of each to-be-recommended service.

In a possible implementation of the first aspect, when the rich information service is added to the target pattern, the method further includes: obtaining duration in which a user instruction is not received in a current user interface UI for displaying the target pattern; and increasing a historical click-through rate of the rich information service if the duration exceeds a preset threshold. In this implementation, when the target pattern includes a plurality of rich information services, if the user stays, for more than specific duration, in the UI interface in which the target pattern is located, and delivers no instruction to the electronic device, it is considered that the user is currently browsing all the rich information services in the target pattern, and a historical click-through rate of each rich information service in the target pattern increases. A probability that the rich information service is recommended for display is further improved.

In a possible implementation of the first aspect, when the rich information service includes a to-be-reminded service, and the plurality of to-be-recommended services include the to-be-reminded service, the selecting, based on historical click-through rates of the plurality of to-be-recommended services and sizes of display areas included in a plurality of candidate patterns, a target pattern from the plurality of candidate patterns for display includes: selecting, based on the historical click-through rates of the plurality of to-be-recommended services, the sizes of the display areas included in the plurality of candidate patterns, and priorities of the plurality of to-be-recommended services, the target pattern from the plurality of candidate patterns for display. It can be learned from this implementation that a specific manner for obtaining the target pattern is provided. This increases diversity of the solution.

In a possible implementation of the first aspect, the first condition includes at least one of switching from a screen-locked state to an unlocked state, a device being in a preset scenario, or occurrence of a change in first N to-be-recommended services ranked in descending order of historical click-through rates, where N is a positive integer, and a determining factor of the preset scenario includes at least one of time and a geographical location. In this implementation, several possible first conditions are provided. This increases diversity of the solution.

In a possible implementation of the first aspect, the obtaining a plurality of to-be-recommended services when a first condition is met includes:

obtaining a plurality of different to-be-recommended services from a service interest list, a historical click-through rate list, or a reminder service list when the first condition is met, where the service interest list includes a plurality of services recently used by the user, the historical click-through rate list includes a plurality of services with high historical click-through frequency of the user, and the reminder service list includes a to-be-reminded service monitored by the device.

In this implementation, several channels for obtaining a to-be-recommended service are provided. This increases diversity of the solution.

In a possible implementation of the first aspect, when it is learned that the device is in the preset scenario, the plurality of different to-be-recommended services further include a plurality of services obtained from a scenario-bound service list, and the scenario-bound service list includes a plurality of services bound to the preset scenario. In this implementation, a new channel for obtaining a to-be-recommended service is provided. This increases diversity of the solution.

A second aspect of embodiments of this application provides an electronic device, including: an obtaining module, configured to obtain a plurality of to-be-recommended services when a first condition is met, where the plurality of to-be-recommended services include at least one of a rich information service, a direct service, or an application service, each to-be-recommended service is indicated by using a card of at least one size, and a size of a card indicating the rich information service or the direct service is greater than a size of a card indicating the application service; and a processing module, configured to select, based on historical click-through rates of the plurality of to-be-recommended services obtained by the obtaining module and sizes of display areas included in a plurality of candidate patterns, a target pattern from the plurality of candidate patterns for display.

In a possible implementation of the second aspect, different types of to-be-recommended services correspond to different sizes, and a to-be-recommended service displayed in the target pattern is a to-be-recommended service that matches a size of each display area in the target pattern.

In a possible implementation of the second aspect, the processing module is specifically configured to: obtain a score of each candidate pattern in the plurality of candidate patterns, where a positive correlation factor of the score of the candidate pattern is a size of a display area included in the candidate pattern, another positive correlation factor of the score of the candidate pattern is a score of a to-be-added service in the display area, and the score of the to-be-added service is positively correlated with a historical click-through rate; and select a candidate pattern with a highest score from the plurality of candidate patterns as the target pattern for display.

In a possible implementation of the second aspect, if the to-be-added service includes a rich information service, a score of the to-be-added rich information service is negatively correlated with a historical exposure rate of the rich information service.

In a possible implementation of the second aspect, the electronic device further includes a prediction module, and the prediction module is configured to predict, by using a first model, a probability that a user performs an operation on each to-be-recommended service currently. The processing module is specifically configured to select, based on the historical click-through rates of the plurality of to-be-recommended services, the sizes of the display areas included in the plurality of candidate patterns, and the probability, the target pattern from the plurality of candidate patterns for display.

In a possible implementation of the second aspect, the electronic device further includes a monitoring module, and the monitoring module is configured to: when the rich information service is added to the target pattern, obtain duration in which a user instruction is not received in a current user interface UI for displaying the target pattern. The processing module is further configured to increase a historical click-through rate of the rich information service if the duration exceeds a preset threshold.

In a possible implementation of the second aspect, the rich information service includes a to-be-reminded service, and the processing module is specifically configured to select, based on the historical click-through rates of the plurality of to-be-recommended services, the sizes of the display areas included in the plurality of candidate patterns, and priorities of the plurality of to-be-recommended services, the target pattern from the plurality of candidate patterns for display.

In a possible implementation of the second aspect, the first condition includes at least one of switching from a screen-locked state to an unlocked state, a device being in a preset scenario, or occurrence of a change in a status of one or more of the plurality of to-be-recommended services, where N is a positive integer, and a determining factor of the preset scenario includes at least one of time and a geographical location.

In a possible implementation of the second aspect, the obtaining module is specifically configured to obtain a plurality of different to-be-recommended services from a service interest list, a historical click-through rate list, or a reminder service list when the first condition is met, where the service interest list includes a plurality of services recently used by the user, the historical click-through rate list includes a plurality of services with high historical click-through frequency of the user, and the reminder service list includes a to-be-reminded service monitored by the device.

In a possible implementation of the second aspect, when it is learned that the device is in the preset scenario, the plurality of different to-be-recommended services further include a plurality of services obtained from a scenario-bound service list, and the scenario-bound service list includes a plurality of services bound to the preset scenario.

A third aspect of embodiments of this application provides an electronic device, including a memory, configured to store computer-readable instructions.

The electronic device further includes a processor coupled to the memory, configured to execute the computer-readable instructions in the memory, to perform the method according to any one of the first aspect or the possible implementations of the first aspect.

A fourth aspect of embodiments of this application provides a computer-readable storage medium, including a program. When the program is run on a computer, the computer is enabled to perform the method according to any one of the first aspect or the possible implementations of the first aspect.

A fifth aspect of embodiments of this application provides a chip. The chip is coupled to a memory, and is configured to execute a program stored in the memory, to perform the method according to any one of the first aspect or the possible implementations of the first aspect.

A seventh aspect of embodiments of this application provides a computer program product. When the computer program product is executed on a computer, the computer is enabled to perform the method according to any one of the first aspect or the possible implementations of the first aspect. For technical effects brought by any one of the second aspect to the seventh aspect or the possible implementations of the second aspect to the seventh aspect, refer to the technical effects brought by the first aspect or the different possible implementations of the first aspect. Details are not described herein again.

According to the solution provided in embodiments of this application, one candidate pattern may be selected from a plurality of candidate patterns to recommend a service to a user. In a process of selecting one candidate pattern from the plurality of candidate patterns, a historical click-through rate of each target to-be-recommended service added to the candidate pattern and a size of a display area that is in the candidate pattern and that is used to add the target to-be-recommended service are considered. Because a size of a card indicating a rich information service or a direct service is greater than a size of a card indicating an application service, even if a historical click-through rate of the direct service or the rich information service added to the candidate pattern is low, the candidate pattern may be selected for display. According to the solution provided in embodiments of this application, a probability that the rich information service or the direct service is recommended for display can be improved.

**BRIEF DESCRIPTION OF DRAWINGS**

FIG. 1a is a schematic diagram of an application scenario of a service recommendation method according to an embodiment of this application;

FIG. 1b is a schematic diagram of an application scenario of another service recommendation method according to an embodiment of this application;

FIG. 2a is a schematic diagram of an application scenario of another service recommendation method according to an embodiment of this application;

FIG. 2b is a schematic diagram of an application scenario of another service recommendation method according to an embodiment of this application;

FIG. 2c is a schematic diagram of an application scenario of another service recommendation method according to an embodiment of this application;

FIG. 3 is a schematic diagram of a structure of an electronic device according to an embodiment of this application;

FIG. 4 is a schematic flowchart of a service recommendation method according to an embodiment of this application;

FIG. 5 is a schematic flowchart of a service recommendation method according to an embodiment of this application;

FIG. 6 is a schematic diagram of a system architecture according to an embodiment of this application;

FIG. 7 is a schematic diagram of a system architecture according to an embodiment of this application;

FIG. 8a is a schematic diagram of a specification of a service recommendation area according to an embodiment of this application;

FIG. 8b is a schematic diagram of a specification of another service recommendation area according to an embodiment of this application;

FIG. 8c is a schematic diagram of a specification of another service recommendation area according to an embodiment of this application;

FIG. 8d is a schematic diagram of a specification of another service recommendation area according to an embodiment of this application;

FIG. 8e is a schematic diagram of a specification of another service recommendation area according to an embodiment of this application;

FIG. 8f is a schematic diagram of a specification of another service recommendation area according to an embodiment of this application;

FIG. 9 is a schematic flowchart of another service recommendation method according to an embodiment of this application;

FIG. 10 is a schematic flowchart of another service recommendation method according to an embodiment of this application;

FIG. 11 is a schematic flowchart of another service recommendation method according to an embodiment of this application;

FIG. 12 is a schematic diagram of an application scenario of another service recommendation method according to an embodiment of this application;

FIG. 13 is a schematic diagram of an application scenario of another service recommendation method according to an embodiment of this application;

FIG. 14 is a schematic flowchart of another service recommendation method according to an embodiment of this application;

FIG. 15a is a schematic diagram of an application scenario of another service recommendation method according to an embodiment of this application;

FIG. 15b is a schematic diagram of an application scenario of another service recommendation method according to an embodiment of this application;

FIG. 15c is a schematic diagram of an application scenario of another service recommendation method according to an embodiment of this application;

FIG. 15d is a schematic diagram of an application scenario of another service recommendation method according to an embodiment of this application; and

FIG. 16 is a schematic diagram of a structure of another electronic device according to an embodiment of this application.

## DESCRIPTION OF EMBODIMENTS

The following describes embodiments of this application with reference to accompanying drawings. It is clear that the described embodiments are merely some but not all of embodiments of this application. A person of ordinary skill in the art may learn that, with development of technologies and emergence of a new scenario, the technical solutions provided in embodiments of this application are also applicable to a similar technical problem.

Embodiments of this application provide a service recommendation method and a device. The service recommendation method provided in embodiments of this application is applied to different devices, to increase recommendation frequencies of a rich information service and a direct service, so that a recommended service is more appropriate and better meets a real requirement of a user.

To better understand the solutions provided in embodiments of this application, the following first describes a typical application scenario that may be adapted to embodiments of this application.

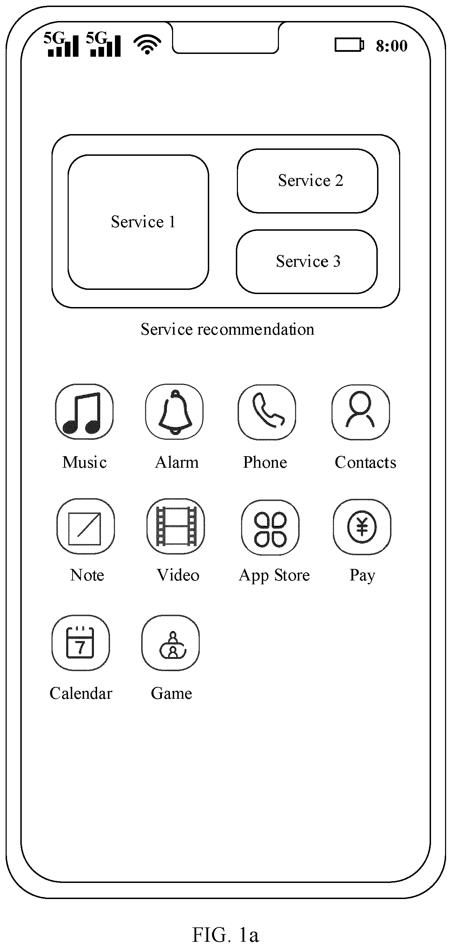

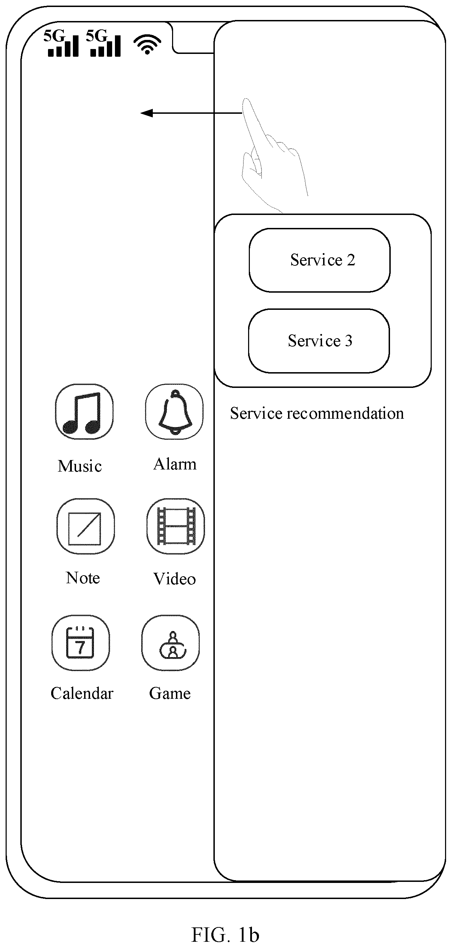

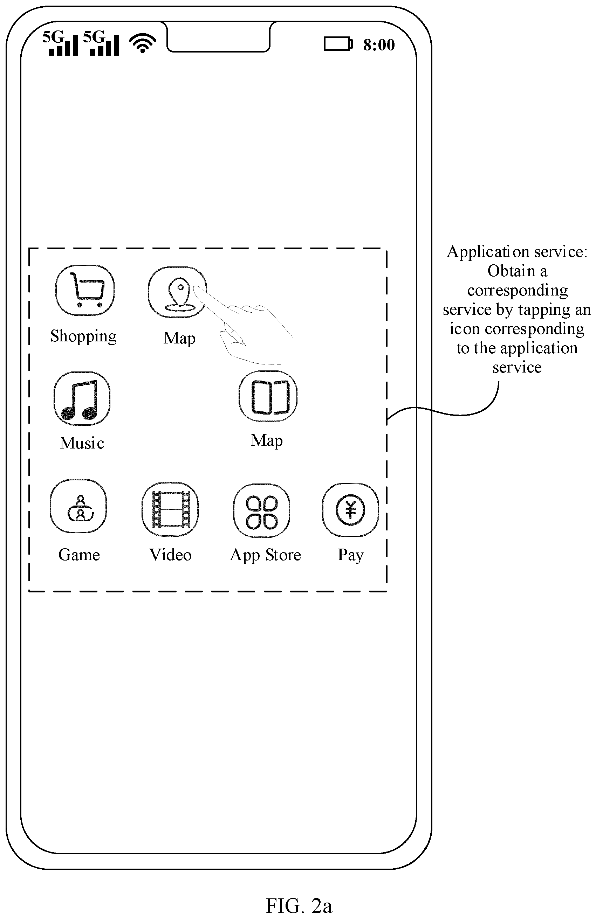

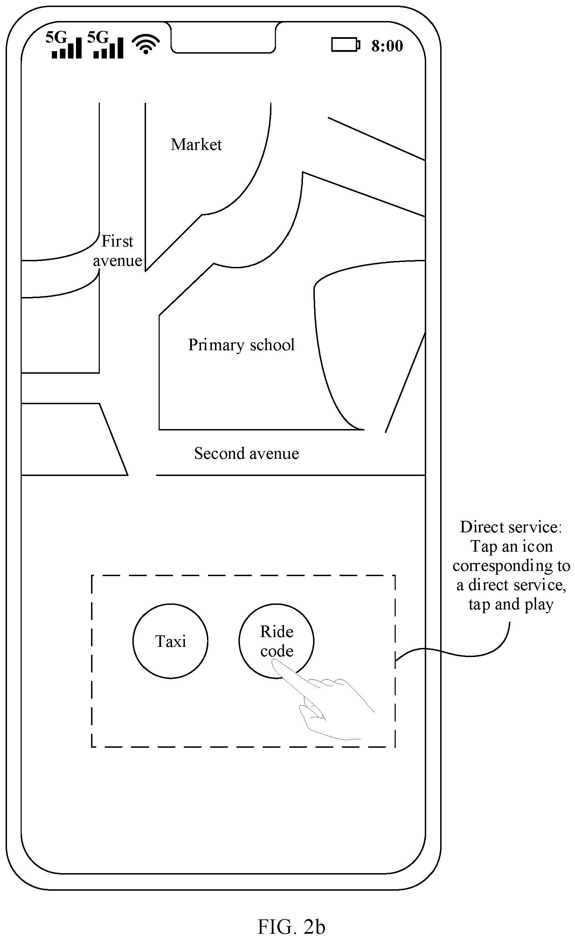

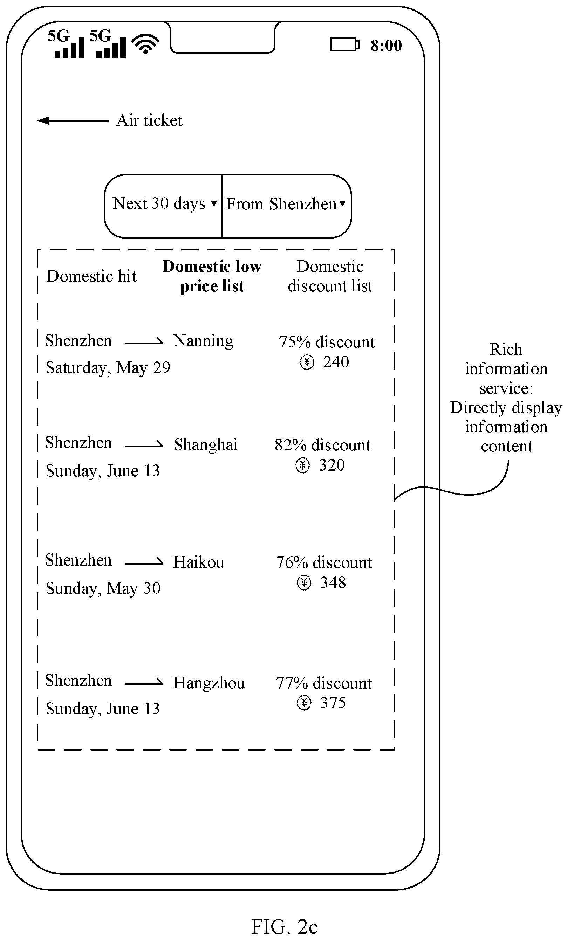

Service recommendation may also be referred to as personalized service recommendation or service suggestion, and usually refers to an information service mode in which one or more services are actively recommended to a user in a user interface (user interface, UI), to help the user use each service more effectively. The service in embodiments of the present invention is an object that can provide information or an interaction function for a user. An electronic device may display a service recommendation area in a UI in an initial state, to recommend each service to a user; or may display a service recommendation area or close a service recommendation area based on an instruction of a user. The service recommendation area may be located in any area in the UI. This is not limited in embodiments of this application. For example, the service recommendation area may be located in a page displayed in a status bar or a drop-down status bar, a leftmost screen, an adjacent area of an area in which a global search function is located, or the like. For example, FIG. 1a and FIG. 1b show possible locations of two service recommendation areas in a UI. As shown in FIG. 1a, the service recommendation area may be directly displayed in a home screen UI, or the service recommendation area may be displayed in a display interface slid out from a side edge in FIG. 1b. A user may invoke the display interface by using a preset instruction, to obtain the service recommendation area. In embodiments of this application, different services are classified into three types: an application service, a direct service, and a rich information service. The application service is a third-party application (Application, APP). FIG. 2a shows icons of several application services. A user may tap an icon corresponding to an app in a UI to obtain a corresponding application service. Usually, each application service may further include a plurality of subservices. In embodiments of this application, a service that can be obtained and used by a user through single tapping in these subservices is referred to as a direct service. Except that the subservices included in the application services are direct services, direct services may further include some services that can be used through tapping without downloading or installation, for example, a ride code service. FIG. 2b shows several direct services. A user may tap an icon corresponding to a direct service to obtain the corresponding direct service. The direct service is a service that can be used immediately after being tapped. Different from the application service and the direct service having corresponding icons, the rich information service does not have a corresponding icon. FIG. 2c shows a possible rich information service. The rich information service is a service that directly displays information. The rich information service is used to provide an information display service for a user. The user can obtain information by browsing the rich information service.

Currently, for the foregoing several services, an electronic device recommends a service to a user based on a historical click-through rate of each service. In other words, a service with a higher historical click-through rate is more likely to be recommended for display. The applicant finds that, in this manner of recommending a service to a user based on a historical click-through rate, a probability that a direct service or a rich information service is recommended is likely to be reduced. Especially for the rich information service in which information can be obtained without tapping, a probability that the rich information service is recommended is greatly reduced compared with that of the application service. Specifically, some direct services and rich information services are subservices in an application service, and a user needs to first tap the application service to obtain a corresponding direct service or rich information service. This may cause a click-through rate of the direct service or the rich information service to be counted as a click-through rate of the application service, or may cause a click-through rate of the application service to increase faster than a click-through rate of the direct service or the rich information service. Therefore, when a service is recommended based on a click-through rate, the application service may be preferentially recommended, but the direct service or the rich information service in subservices of the application service is not preferentially recommended.

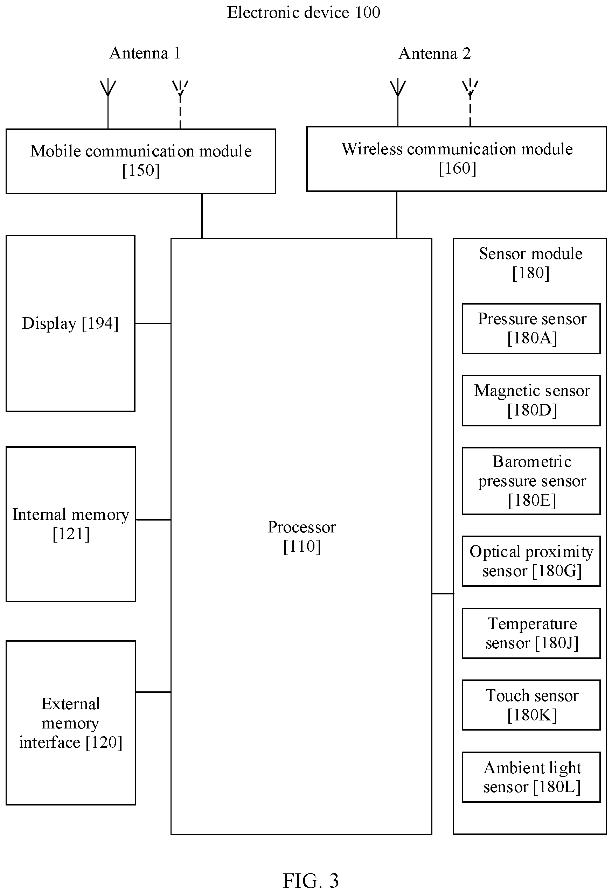

To resolve the foregoing problem, embodiments of this application provide a service recommendation method and a device to which the service recommendation method is applied. For ease of understanding this solution, a typical structure of a device according to an embodiment of this application is first described with reference to FIG. 3. Refer to FIG. 3 first. FIG. 3 is a schematic diagram of a structure of an electronic device according to an embodiment of this application.

FIG. 3 is a schematic diagram of a structure of an electronic device 100.

The electronic device 100 may include at least one of a mobile phone, a foldable electronic device, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, or a smart city device. A specific type of the electronic device 100 is not particularly limited in embodiments of this application.

The electronic device 100 may include a processor 110, an external memory interface 120, an internal memory 121, an antenna 1, an antenna 2, a mobile communication module 150, a wireless communication module 160, a sensor module 180, a display 194, and the like. The sensor module 180 may include a pressure sensor 180A, a magnetic sensor 180D, an acceleration sensor 180E, an optical proximity sensor 180G, a temperature sensor 180J, a touch sensor 180K, an ambient light sensor 180L, and the like.

It may be understood that the structure shown in this embodiment of this application does not constitute a specific limitation on the electronic device 100. In some other embodiments in embodiments of this application, the electronic device 100 may include more components (for example, may further include a camera, a power supply, an audio module, a USB interface, and a headset jack) or fewer components (for example, include only the external memory interface 120 or only the internal memory 121) than those shown in the figure, or combine some components, or split some components, or have different component arrangements. The components shown in the figure may be implemented by hardware, software, or a combination of software and hardware. The processor 110 may include one or more processing units. For example, the processor 110 may include a central processing unit (central processing units, CPU), an application processor (application processor, AP), a modem processor, a graphics processing unit (graphics processing unit, GPU), a multi-block neural processing unit (neural processing unit, NPU), or a multi-block tensor processing unit (tensor processing unit, TPU). Different processing units may be independent components, or may be integrated into one or more processors.

The processor may generate an operation control signal based on instruction operation code and a time sequence signal, to complete control of instruction fetching and instruction execution.

A memory may be further disposed in the processor 110, to store instructions and data. In some embodiments, the memory in the processor 110 may be a cache. The memory may store instructions or data used or frequently used by the processor 110. If the processor 110 needs to use the instructions or data, the instructions or data may be directly invoked from the memory. This avoids repeated access, and reduces waiting time of the processor 110, so that system efficiency is improved.

It may be understood that the interface connection relationship between the modules shown in this embodiment of this application is merely an example, and does not constitute a limitation on the structure of the electronic device 100. In some other embodiments in embodiments of this application, the electronic device 100 may alternatively use an interface connection manner different from that in the foregoing embodiment, or a combination of a plurality of interface connection manners.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be multiplexed to improve antenna utilization. For example, the antenna 1 may be multiplexed into a diversity antenna of a wireless local area network. In some other embodiments, the antenna may be used in combination with a tuning switch.

The mobile communication module 150 may provide a solution for wireless communication, including 2G/3G/4G/5G and the like, that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least some function modules of the mobile communication module 150 may be disposed in the processor 110. In some embodiments, at least some function modules of the mobile communication module 150 may be disposed in a same component as at least some modules of the processor 110.

The wireless communication module 160 may provide a solution for wireless communication that is applied to the electronic device 100 and that includes a wireless local area network (wireless local area networks, WLAN) (such as a wireless fidelity (wireless fidelity, Wi-Fi) network), Bluetooth (Bluetooth, BT), Bluetooth low energy (Bluetooth low energy, BLE), ultra-wideband (ultra-wideband, UWB), a global navigation satellite system (global navigational satellite system, GNSS), frequency modulation (frequency modulation, FM), near field communication (near field communication, NFC), an infrared (infrared, IR) technology, and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another electronic device according to a wireless communication technology.

The electronic device 100 may implement a display function by using the GPU, the display 194, the application processor, and the like. The GPU is a microprocessor for image processing, and is connected to the display 194 and the application processor. The GPU is configured to perform mathematical and geometric calculation and render graphics. The processor 110 may include one or more GPUs that execute program instructions to generate or change display information.

The display 194 is configured to display an image, a video, and the like. The display 194 includes a display panel. In some embodiments, the electronic device 100 may include one or more displays 194. In the solution provided in embodiments of this application, the display 194 may be configured to present a service recommended by the device through calculation.

The NPU is a neural-network (neural-network, NN) computing processor that processes input information rapidly by referring to a structure of a biological neural network, for example, by referring to a transmission mode between human brain neurons, and can further perform self-learning continuously. In embodiments of the present invention, the NPU may implement a service recommendation method of the electronic device 100, or may predict a probability of using each service by a user, or the like.

The internal memory 121 may be configured to store computer executable program code, where the executable program code includes instructions. The internal memory 121 may include a program storage area and a data storage area. The program storage area may store an operating system, an application program required by at least one function (for example, a sound play function or an image play function), and the like. The data storage area may store data (such as audio data or a phone book) created in a use process of the electronic device 100. In addition, the internal memory 121 may include a high-speed random access memory, and may further include a non-volatile memory, such as at least one magnetic disk storage component, a flash memory component, and a universal flash storage (universal flash storage, UFS). The processor 110 runs the instructions stored in the internal memory 121 and/or the instructions stored in the memory disposed in the processor, to perform various function methods or data processing of the electronic device 100, for example, perform the service recommendation method provided in embodiments of this application.

The pressure sensor 180A is configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines strength of the pressure based on the change of the capacitance. When a touch operation is performed on the display 194, the electronic device 100 detects strength of the touch operation through the pressure sensor 180A. The electronic device 100 may also calculate a position of the touch based on a detection signal of the pressure sensor 180A. In some embodiments, when a touch operation whose touch operation intensity is less than a first pressure threshold acts on an icon of an application, it is considered that the application is tapped, and a historical click-through rate of the application is increased.

The touch sensor 180K is also referred to as a "touch device". The touch sensor 180K may be disposed on the display 194. The touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. Visual output related to the touch operation may be provided by using the display 194. In some other embodiments, the touch sensor 180K may alternatively be disposed on a surface of the electronic device 100 at a position different from that of the display 194.

Optionally, the electronic device 100 may further include another sensor, for example, a barometric pressure sensor, a magnetic sensor, an optical proximity sensor, and an ambient light sensor.

The foregoing describes, with reference to FIG. 3, the electronic device to which embodiments of this application are applicable. Based on the electronic device, the following describes a service recommendation method provided in embodiments of this application.

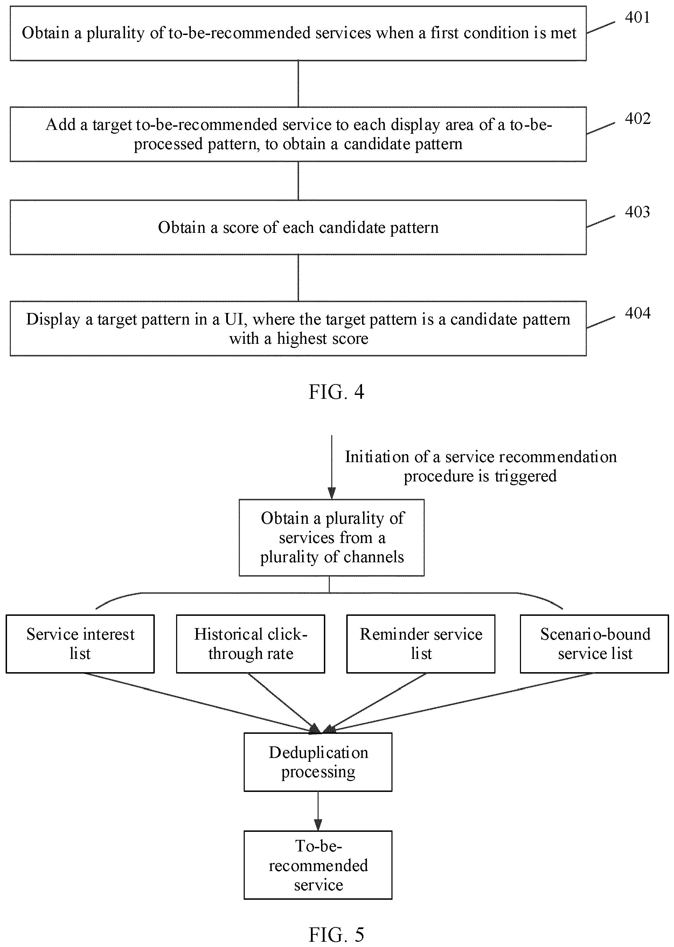

FIG. 4 is a schematic flowchart of a service recommendation method according to an embodiment of this application.

The service recommendation method provided in this embodiment of this application may include the following steps.

401: Obtain a plurality of to-be-recommended services when a first condition is met.

An electronic device may be triggered, in a plurality of manners, to perform the service recommendation method described in this embodiment of this application. For example, the following provides several possible first conditions.

In a possible implementation, the first condition is that the electronic device learns that the electronic device enters an unlocked state from a screen-locked state. That is, if the electronic device learns that a user performs an unlocking operation, the electronic device starts a service recommendation procedure. For a specific service recommendation procedure, refer to step 401 to step 404 for understanding. It should be noted that before the service recommendation procedure is performed this time, the electronic device may have displayed a service recommendation result based on a result of performing service recommendation last time. If a result of performing service recommendation this time is consistent with the result of performing service recommendation last time, the service recommendation result of the electronic device is not updated. If a result of performing service recommendation this time is inconsistent with the result of performing service recommendation last time, the result of performing service recommendation last time is updated. In a possible implementation, to save computing power and avoid that the electronic device is frequently triggered to start a service recommendation procedure when the user frequently performs the unlocking operation, it may be further specified that if interval duration between two adjacent unlocking operations does not exceed preset duration, the service recommendation procedure is not started when the latter unlocking operation is obtained; or if interval duration between two adjacent unlocking operations exceeds preset duration, the service recommendation procedure is started when the latter unlocking operation is obtained. For example, it is assumed that the preset duration is 10 minutes. If a time point of a previous unlocking operation of the user is 11:10 and a time point of a current unlocking operation is 11:13, because interval duration between the two unlocking operations is 3 minutes and does not exceed the preset duration 10 minutes, the current unlocking operation does not trigger the electronic device to perform a service recommendation procedure. For another example, if a time point of a current unlocking operation is 11:30, because interval duration between the two unlocking operations is 20 minutes and exceeds the preset duration 10 minutes, the current unlocking triggers the electronic device to perform a service recommendation procedure. The preset duration may be set by the user. Alternatively, the preset duration may be preset by the electronic device, and the user is not allowed to set the preset duration. This is not limited in embodiments of this application.

In a possible implementation, the first condition is that the electronic device learns that first N to-be-recommended services in descending order of historical click-through rates change, where N is a positive integer. The electronic device may collect statistics on historical click-through rates of all services included in the plurality of obtained services, and rank the plurality of services based on the historical click-through rates, for example, rank the plurality of services in descending order of the historical click-through rates. When the electronic device learns that one or more services whose historical click-through rates rank top change, the electronic device starts the service recommendation procedure, and recommends a service to the user based on an updated historical click-through rate of each service. For example, N is 5. At a first moment, after the services are ranked in descending order of the historical click-through rates, top five services are a service 1, a service 2, a service 3, a service 4, and a service 5. At a second moment, after the services are ranked in descending order of the historical click-through rates, top five services are the service 1, a service 6, the service 2, the service 4, and the service 3. In this case, the electronic device learns that top five services in descending order of historical click-through rates change, and the electronic device starts a service recommendation procedure, to recommend a service to the user based on updated historical click-through rates of the services.

In a possible implementation, the first condition is that the electronic device detects that the electronic device is in a preset scenario. A determining factor of the preset scenario includes at least one of time and a geographical location. Different manners may be set to determine whether the electronic device is in the preset scenario. For example, the preset scenario is a commuting scenario. A manner for determining whether the electronic device enters the commuting scenario may include at least one of the following: A current time point belongs to a time period corresponding to a common route, a current location is a map point on the common route, and a current movement direction of the device faces a destination of the common route. The preset scenario in embodiments of this application may include the commuting scenario, a leisure scenario, or the like. Corresponding to each preset scenario, different manners may be set to determine whether the electronic device enters the corresponding scenario. This is not limited in embodiments of this application. When the electronic device determines, in a preset manner, that the device enters the corresponding preset scenario, the electronic device starts a service recommendation procedure.

It should be noted that the foregoing several first conditions are merely examples for description. The electronic device in this embodiment of this application may be triggered in different manners, to start the service recommendation procedure.

When the electronic device is triggered to start the service recommendation procedure, the electronic device may obtain a plurality of services from a plurality of channels, and select some services from the plurality of services as to-be-recommended services. The plurality of to-be-recommended services include a rich information service, a direct service, or an application service. In a possible implementation, as shown in FIG. 5, a plurality of different services may be obtained from one or more channels in a service interest list, a historical click-through rate list, or a reminder service list, and deduplication processing is performed on the services obtained from the different channels, to obtain a to-be-recommended service. The deduplication processing means that only one of same services obtained from different channels is retained, so that the to-be-recommended services are different from each other. It should be noted that, when a plurality of services are obtained from only one channel, a step of deduplication processing may be omitted. In addition, it should be noted that, when there is no repeated service in a plurality of services obtained from different channels, a step of deduplication processing may also be omitted. The service interest list includes a plurality of services recently used by the user. For example, a list formed by arranging, in a time sequence, services used in the last one day is referred to as a service interest list. For another example, a list formed by arranging, in a time sequence, services used in the last 1 hour is referred to as a service interest list. The historical click-through rate list includes a plurality of services with high historical click-through frequency of the user. It may be considered that top M services are services with high historical click-through frequency of the user, and M is a positive integer. For example, it may be considered that services whose historical click-through rates rank top 10 are services with high click-through frequency. Alternatively, it may be specified that services that are within preset duration from a current moment and whose historical click-through rates rank top M are services with high historical click-through frequency of the user. For example, it may be considered that services that are within one week from the current moment and whose historical click-through rates rank top M are services with high historical click-through frequency of the user. The historical reminder service list includes a to-be-reminded service monitored by the device. The to-be-reminded service is used to remind the user, and may include a to-be-reminded service triggered based on an event, or a to-be-reminded service customized by the user. For example, if the electronic device learns, from a third-party application or an SMS message, that the user has booked an air ticket, the electronic device may start a to-be-reminded service to remind the user of flight information. For another example, if the user adds an event reminder by using a calendar, the electronic device may start a to-be-reminded service to remind the user of the event at a time point specified by the user. In a possible implementation, when it is learned that the device is in the preset scenario, a plurality of services are obtained from a scenario-bound service list. The preset scenario has been described above, and details are not described herein again. The scenario-bound service list includes a plurality of services bound to the preset scenario. In a possible implementation, the plurality of services bound to the preset scenario may be preset. For example, a commuting scenario is used as an example, and it is specified that services bound to the commuting scenario include a map service and a running service.

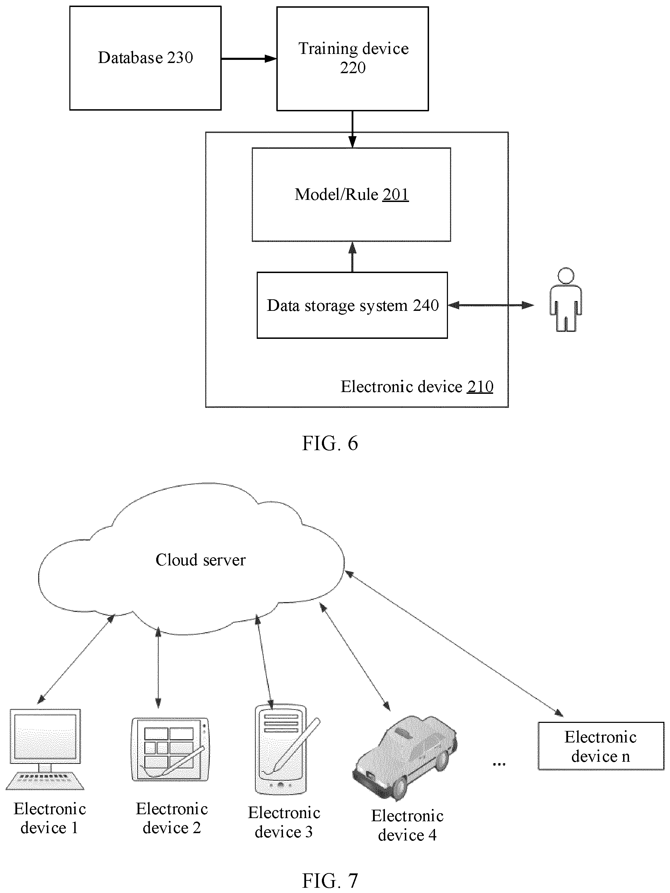

In a possible implementation, in addition to considering the historical click-through rates of the plurality of obtained services, the electronic device may further recommend a service by predicting, by using a model, a plurality of services that may be used by the user in the preset scenario. The following provides a description with reference to FIG. 6. In a model training phase, a database 230 stores a training data set, and the database 230 may be specifically represented as a storage medium in any form, and is not limited to a database in a conventional sense. The training data set may include a plurality of training samples. There may be a plurality of channels for obtaining the training samples. This is not limited in embodiments of this application. For example, states (such as a Bluetooth on state, a data connected state, and a headset connected state) of a large quantity of electronic devices in the preset scenario and an actual operation of a user that is obtained by the electronic device in a corresponding preset scenario may be collected as the training samples. A training device 220 generates a preset model, and performs iterative training on the preset model by using the training data set in the database, to obtain a mature model (model/rule 201). The mature model is a model that has been converged after iterative training, or a model obtained after a preset quantity of iterations is met. The mature model is sent to the electronic device. In an inference phase, after determining that the user currently enters the preset scenario, the electronic device may use current states (such as a Bluetooth on state, a data connected state, and a headset connected state) of the electronic device as input of the model/rule 201. The electronic device 210 may invoke the model/rule 201 to predict services that may be currently used by the user, and consider a list of these services that may be used by the user and that are predicted by the model/rule 201 as a scenario-bound service list. It should be noted that the electronic device may continue to train the model based on a deviation between an actual operation of the user in the current preset scenario and a predicted operation, so that the service that may be used by the user and that is predicted by the model/rule 201 is closer to the actual operation of the user. A data storage system 240 may store an actual operation of the user in each preset scenario and each state of the electronic device in each preset scenario. The model/rule 201 may be trained at intervals of preset duration based on data stored in the data storage system 240, to update the model/rule 201. It should be noted that in a possible implementation, because model training requires a large amount of computing power and depends on a large quantity of training samples, the training device and the electronic device 210 may be two different devices. With reference to FIG. 7, the training device 220 may be deployed in a cloud server. Communication may be established between the cloud server and each electronic device 210 (for example, an electronic device 1, an electronic device 2, an electronic device 3, an electronic device 4, and an electronic device n shown in FIG. 7, where n is a positive integer). Each electronic device sends, to the cloud server, each state of the electronic device and an actual operation of a user after each electronic device enters the preset scenario. The cloud server sends a trained model, that is, the model/rule 201, to each electronic device. It should be noted that the cloud server may perform update training on the model/rule 201 at intervals of preset duration based on data sent by each electronic device, to obtain an updated model/rule 201, and send the updated model/rule 201 to the electronic device. In addition, it should be noted that the user may specify that the electronic device is allowed to send data to the cloud server, or specify that the electronic device is not allowed to send data to the cloud server. The user may also choose to allow the cloud server to send data to the electronic device, or specify that the cloud server is not allowed to send data to the electronic device. When the user specifies that the electronic device is not allowed to send data to the cloud server, the electronic device does not send each state of the electronic device and the actual operation of the user to the cloud server after the electronic device enters the preset scenario. When the user specifies that the cloud server is not allowed to send data to the electronic device, the cloud server does not send the updated model/rule 201 to the electronic device, but the electronic device may still perform update training on a stored model/rule 201 based on data locally obtained by the electronic device. FIG. 6 and FIG. 7 are merely schematic diagrams of architectures provided in embodiments of the present invention. A location relationship between devices, components, modules, and the like shown in the figures does not constitute any limitation.

It should be noted that the foregoing several listed channels for obtaining a service are merely examples for description. In addition to the foregoing solutions of the obtaining channels, different services may be obtained by using other channels in the solution provided in embodiments of this application. For example, a plurality of services may be obtained from a cold precision service list. The cold precision service list refers to some common services preset before delivery of the electronic device. When the electronic device starts a service recommendation procedure for the first time, the electronic device may recommend a service to the user based on a service in the cold precision service list.

402: Add a target to-be-recommended service to each display area of a to-be-processed pattern, to obtain a candidate pattern.

Each to-be-recommended service is indicated by a card of at least one size, and a size of a card indicating a rich information service or a direct service is greater than a size of a card indicating an application service. In a possible implementation, the rich information service is indicated by a card of a size 2*2, or may be indicated by a card of a size 1*2; the direct service is indicated by a card of a size 1 *2; and the application service is indicated by a card of a size 1*1. The card of the size 2*2 means that four grids are arranged into two rows and two columns, the card of the size 1 *2 means that two grids are arranged into one row and two columns, and the card of the size 1 * 1 means one grid. It should be noted that another size may be set to indicate each service. For example, a card of a size 4*4 may be used to indicate a rich information service.

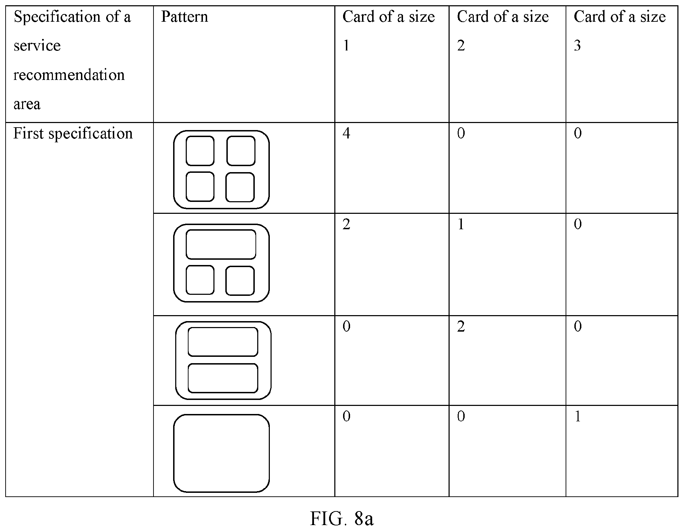

For different electronic devices, a service recommendation area may have a plurality of specifications. For a service recommendation area of each specification, there may be a plurality of display patterns of different specifications. In embodiments of this application, a display template is also referred to as a pattern or a display pattern, and meanings thereof are the same. As shown in FIG. 8a to FIG. 8f, service recommendation areas of several different specifications and possible display templates of a plurality of different specifications for a service recommendation area of each different specification are shown. Different types of services added to display templates of different specifications are described below with reference to FIG. 8a to FIG. 8f by using an example in which an application service is indicated by a card of a size 1, a direct service is indicated by cards of a size 2, a size 4, and a size 6, and a rich information service is indicated by cards of the size 2, a size 3, the size 4, a size 5, the size 6, and a size 7. It should be noted that each display area in the display template may be considered as a card.

A service recommendation area of a first specification shown in FIG. 8a may include four types of display patterns. A first-type pattern includes four display areas of the size 1. Only the application service can be displayed, and neither of the rich information service and the direct service can be displayed. A second-type pattern includes two display areas of the size 1 and one display area of the size 2. For the second-type pattern, the application service can be displayed, and the direct service or the rich information service can be displayed. A third-type pattern includes two display areas of the size 2. For the third-type pattern, the direct service or the rich information service can be displayed, but the application service cannot be displayed. A fourth-type pattern includes one display area of the size 3. For the fourth-type pattern, only the rich information service can be displayed.

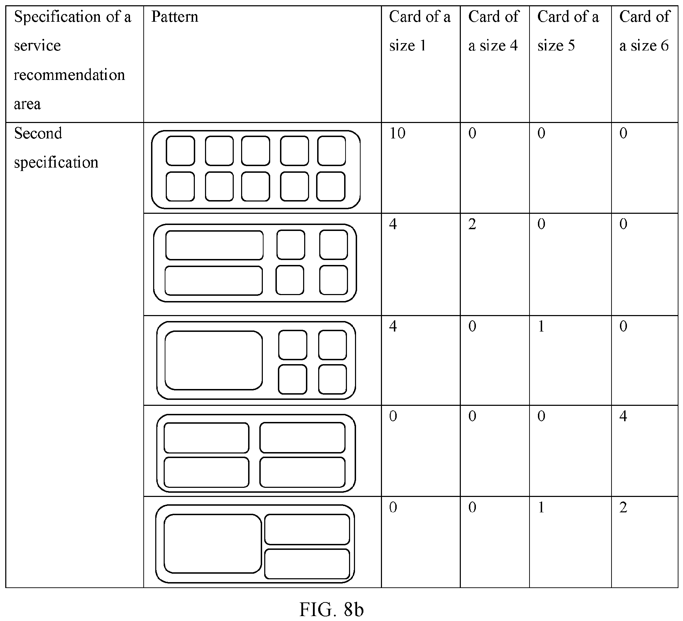

A service recommendation area of a second specification shown in FIG. 8b may include five types of display patterns. A first-type pattern includes 10 display areas of the size 1. Only the application service can be displayed, and neither of the rich information service and the direct service can be displayed. A second-type pattern includes four display areas of the size 1 and two display areas of the size 4. For the second-type pattern, the application service may be displayed by using the display area of the size 1, and the direct service or the rich information service may be displayed by using the display area of the size 4. A third-type pattern includes four display areas of the size 1 and one display area of the size 5. For the third-type pattern, the application service may be displayed by using the display area of the size 1, and the rich information service may be displayed by using the display area of the size 5. A fourth-type pattern includes four display areas of the size 6. For the fourth-type pattern, the rich information service or the direct service may be displayed by using the display area of the size 6. A fifth-type pattern includes two display areas of the size 6 and one display area of the size 5. For the fifth-type pattern, the direct service may be displayed by using the display area of the size 6, and the rich information service may be displayed by using the display area of the size 5 or the size 6.

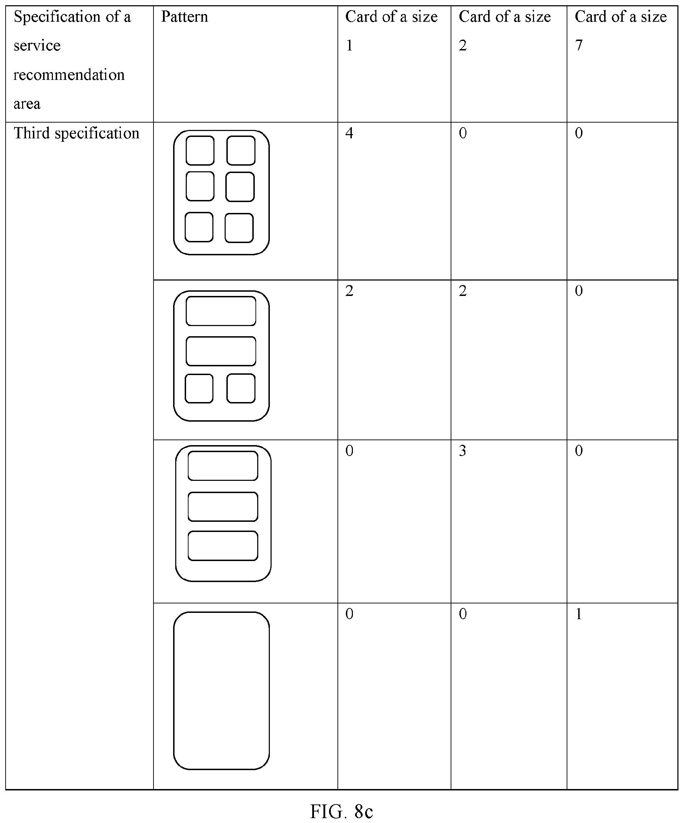

A service recommendation area of a third specification shown in FIG. 8c may include four types of display patterns. A first-type pattern includes six display areas of the size 1. The application service may be displayed by using the display area of the size 1, and neither of the rich information service and the direct service can be displayed. A second-type pattern includes two display areas of the size 1 and two display areas of the size 2. For the second-type pattern, the application service can be displayed, and the direct service or the rich information service can be displayed. A third-type pattern includes three display areas of the size 2. For the third-type pattern, the direct service and the rich information service can be displayed, but the application service cannot be displayed. A fourth-type pattern includes one display area of the size 7. For the fourth-type pattern, only the rich information service can be displayed.

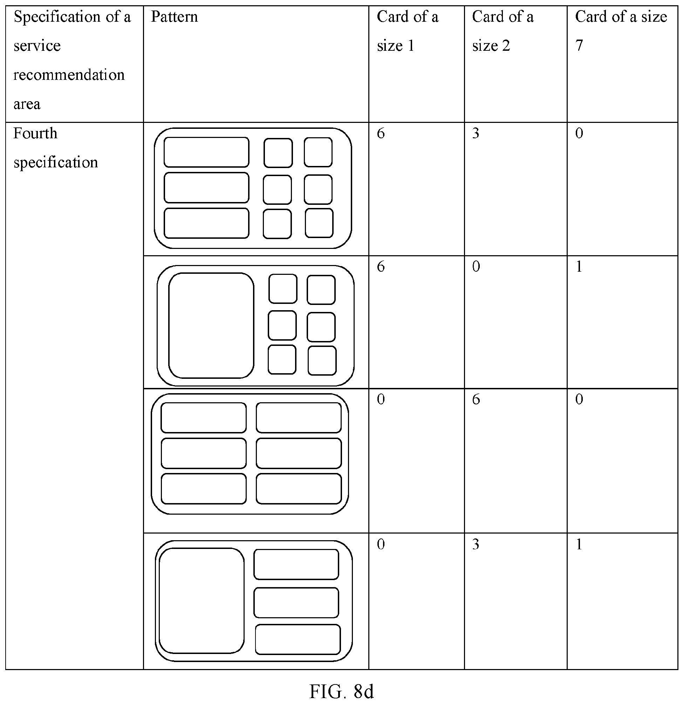

A service recommendation area of a fourth specification shown in FIG. 8d may include four types of display patterns. A first-type pattern includes six display areas of the size 1 and three display areas of the size 2. In other words, for the first-type pattern, the application service and the direct service can be displayed, and the rich information service can be displayed. A second-type pattern includes six display areas of the size 1*1 and one display area of the size 7. For the second-type pattern, both the application service and the rich information service can be displayed, and the direct information service cannot be displayed. A third-type pattern includes six display areas of the size 2. For the third-type pattern, the direct service and the rich information service can be displayed, but the application service cannot be displayed. A fourth-type pattern includes three display areas of the size 2 and one display area of the size 7. For the fourth-type pattern, the rich information service and the direct service can be displayed, but the application service cannot be displayed.

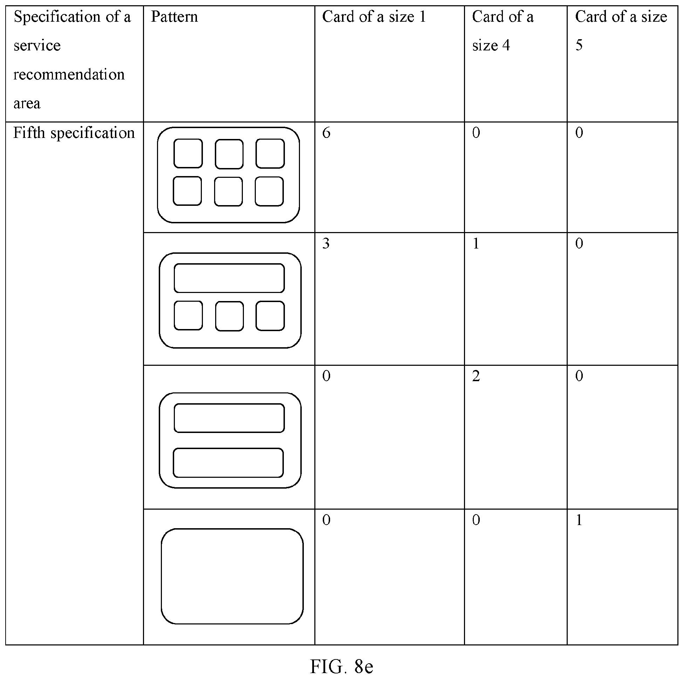

A service recommendation area of a fifth specification shown in FIG. 8e may include four types of display patterns. A first-type pattern includes six display areas of the size 1. The first-type pattern can display the application service. A second-type pattern includes three display areas of the size 1 and one display area of the size 4. For the second-type pattern, the application service can be displayed, and the rich information service and the direct information service can be displayed. A third-type pattern includes two display areas of the size 4. For the third-type pattern, the direct service and the rich information service can be displayed, but the application service cannot be displayed. A fourth-type pattern includes one display area of the size 5. For the fourth-type pattern, only the rich information service can be displayed, and neither of the application service and the direct service can be displayed.

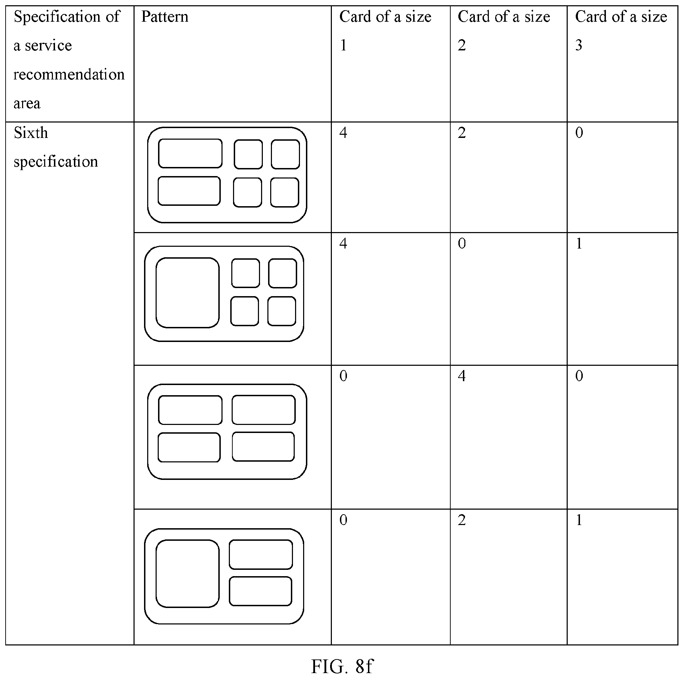

A service recommendation area of a sixth specification shown in FIG. 8f may include four types of display patterns. A first-type pattern includes four display areas of the size 1 and two display areas of the size 2. In other words, for the first-type pattern, the application service can be displayed, and the direct service and/or the rich information service can be displayed. A second-type pattern includes four display areas of the size 1 and one display area of the size 3. For the second-type pattern, the application service can be displayed, and the rich information service can be displayed. A third-type pattern includes four display areas of the size 2. For the third-type pattern, the direct service and the rich information service can be displayed, but the application service cannot be displayed. A fourth-type pattern includes two display areas of the size 2 and one display area of the size 3. For the fourth-type pattern, the rich information service and the direct service can be displayed, but the application service cannot be displayed.

It should be noted that, for different electronic devices, service display areas of different specifications may be used, and for each electronic device, service display areas of a plurality of different specifications may be used. In a possible implementation, when the electronic device is a mobile phone, the service recommendation area shown in FIG. 8a or FIG. 8b may be used. When the electronic device is a tablet that displays an interface in portrait mode, the service recommendation area shown in FIG. 8c or FIG. 8d may be used. When the electronic device is a tablet that displays an interface in landscape mode, the service recommendation area shown in FIG. 8e or FIG. 8f may be used.

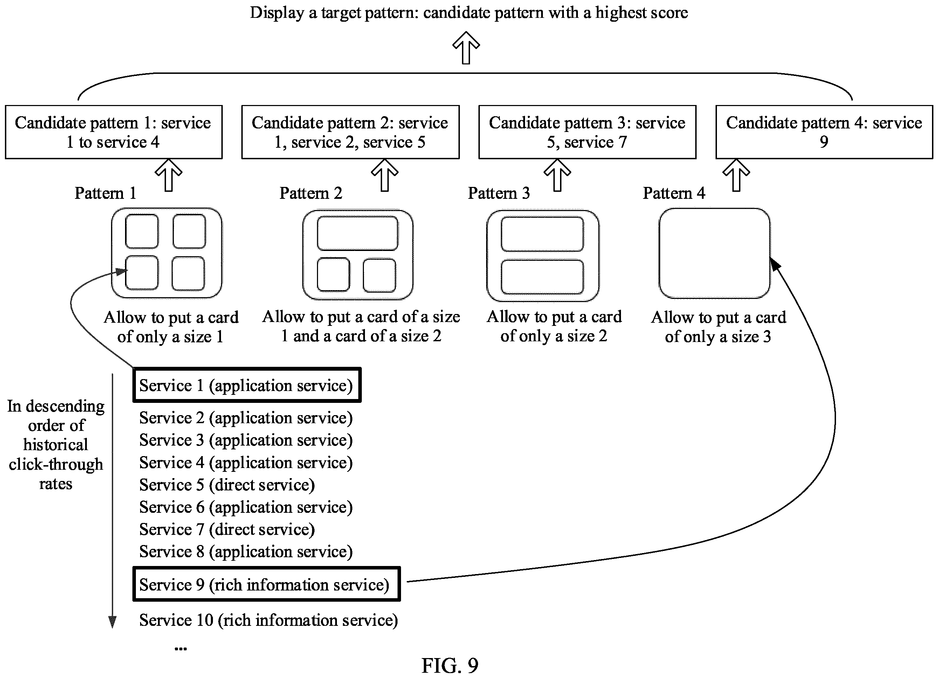

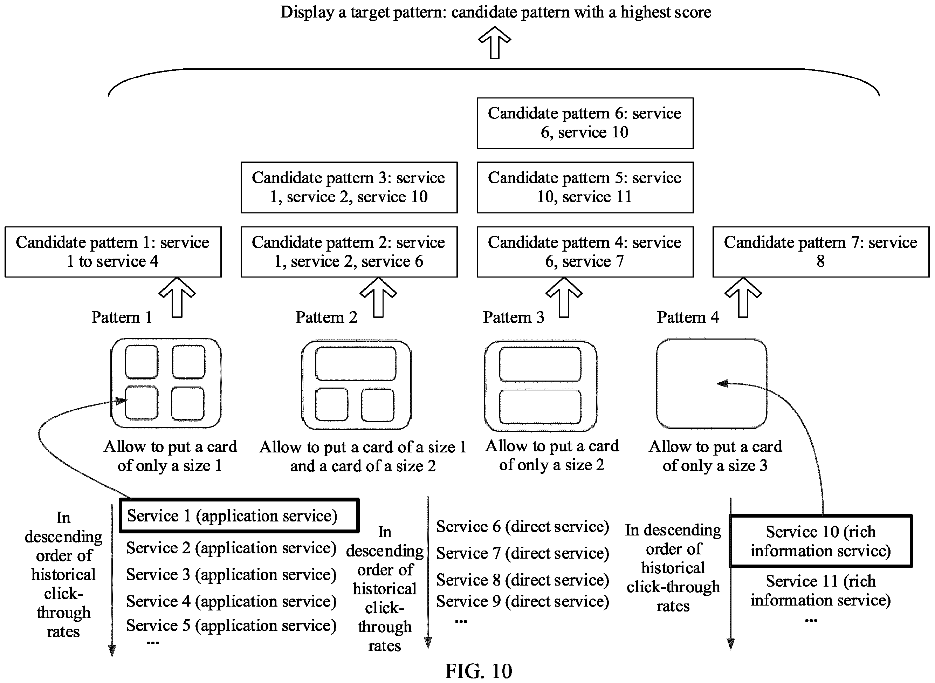

A to-be-recommended service indicated by a target card is selected from the plurality of to-be-recommended services, and the to-be-recommended service indicated by the target card is added to the to-be-processed pattern. In the to-be-recommended service indicated by the target card, a score of the target to-be-recommended service is the highest. A positive correlation factor of the score of the to-be-recommended service is a historical click-through rate of the to-be-recommended service, the target card is a card that has a same size as the display area in cards, and the to-be-processed pattern is any one of a plurality of preset patterns. To better understand a process of obtaining a candidate pattern, the following uses the service recommendation area of the first specification as an example to provide a description with reference to FIG. 9 and FIG. 10. In a possible implementation, all services are ranked based on historical click-through rates. As shown in FIG. 9, it is assumed that to-be-recommended services include a service 1 to a service 10, where the service 1 to the service 4, the service 6, and the service 8 are application services, the service 5 and the service 7 are direct services, and the service 9 and the service 10 are rich information services. It is assumed that all the services are ranked in descending order of historical click-through rates, and it is learned that the historical click-through rates of the service 1 to the service 10 are in descending order. For a pattern 1, only the card of the size 1 can be put, and only the application service is indicated by the card of the size 1. Because a positive correlation factor of a score of a service is a historical click-through rate of the service, application services with top four historical click-through rates are selected and put in the pattern 1, to obtain a candidate pattern 1. For the pattern 2, two cards of the size 1 and one card of the size 2 are allowed to be put. Based on a same idea of obtaining the candidate pattern 1, the service 1, the service 2, and the service 5 are put in the pattern 2, to obtain a candidate pattern 2. For the pattern 3, two cards of the size 2 are allowed to be put. Based on a same idea of obtaining the candidate pattern 1, the service 5 and the service 7 are put in the pattern 3, to obtain a candidate pattern 3. For the pattern 4, one card of the size 3 is allowed to be put. Based on a same idea as the candidate pattern 1, the service 9 is put in the pattern 3, to obtain a candidate pattern 4.

In a possible implementation, each type of service may be further ranked based on a historical click-through rate based on different service types. As shown in FIG. 10, it is assumed that to-be-recommended services include a service 1 to a service 11, where the service 1 to the service 5 are application services, the service 6 to the service 9 are direct services, and the service 10 and the service 11 are rich information services. It is assumed that each type of service is ranked based on a historical click-through rate. For the application service, it is learned that historical click-through rates of the service 1 to the service 5 are in descending order; for the direct service, it is learned that historical click-through rates of the service 6 to the service 9 are in descending order; and for the rich information service, historical click-through rates of the service 10 and the service 11 are in descending order. For a pattern 1, only the card of the size 1 can be put, and only the application service is indicated by the card of the size 1. Because a positive correlation factor of a score of a service is a historical click-through rate of the service, application services with top four historical click-through rates are selected and put in the pattern 1, to obtain a candidate pattern 1. For a pattern 2, two cards of the size 1 and one card of the size 2 are allowed to be put. The card of the size 2 can be used to indicate both the direct service and the rich information service. A historical click-through rate of a service is only one positive correlation factor of a score of the service, and the score of the service may further have another positive correlation factor. Therefore, in consideration of this case, to ensure that a service added to each candidate pattern is a service with a highest score, for the pattern 2, two candidate patterns may be obtained, which are respectively a candidate pattern 2 obtained after the service 1, the service 2, and the service 6 are put in the pattern 2, and a candidate pattern 3 obtained after the service 1, the service 2, and the service 10 are put in the pattern 2. For a pattern 3, three candidate patterns may be obtained, which are respectively a candidate pattern 4 obtained after the service 6 and the service 7 are put in the pattern 3, a candidate pattern 5 obtained after the service 10 and the service 11 are put in the pattern 3, and a candidate pattern 6 obtained after the service 6 and the service 10 are put in the pattern 3. For a pattern 4, the card of only the size 3 is allowed to be put, and the service 8 is put in the pattern 4, to obtain a candidate pattern 7. It should be noted that, the positive correlation factor means that when another factor that affects a service score is fixed, a larger positive correlation factor indicates a higher service score.

In a possible implementation, for all candidate patterns, a maximum quantity of services that can be added for each type of service is specified. Therefore, when the to-be-recommended service is obtained, only a fixed quantity of services may be obtained as to-be-recommended services, and not all the to-be-recommended services need to be obtained. For example, for the service recommendation area of the first specification shown in FIG. 8a, a maximum of four application services, two direct services, and two rich information services can be added. In this case, only four application services with highest scores, two direct services with highest scores, and two rich information services with highest scores may be obtained as to-be-recommended services.

403: Obtain a score of each candidate pattern.

A positive correlation factor of the score of the candidate pattern is a size of a display area of the candidate pattern, and another positive correlation factor of the score of the candidate pattern is a score of a target to-be-recommended service added to the display area. In a possible implementation, an impact factor of a size of a first display area for a score of a first candidate pattern may be obtained based on a ratio of the size of the first display area to a sum of sizes of all display areas in the first candidate pattern in which the first display area is located. In a possible implementation, an impact factor of a score of a first service for the score of the first candidate pattern may be obtained based on a ratio of a historical click-through rate of the first service added to the first display area to a sum of historical click-through rates of services added to the first candidate pattern in which the first display area is located. For example, the formula 1-1 provides a possible manner for calculating the score of each candidate pattern.

$$\text{score(pattern)} = \frac{\text{patternSize}}{\sum_i size(service_i)} * \sum_i \big( size(service_i) * score(service_i) \big) \quad (1\text{-}1)$$

In the formula (1-1), score(pattern) represents a score of a candidate pattern, and patternsize represents a size of a service recommendation area to which the pattern belongs, for example, may be a size of the service recommendation area of the first specification shown in FIG. 8a; or for another example, may be a size of the service recommendation area of the second specification shown in FIG. 8b. $size(service_i)$ represents a size of a display area in the candidate pattern. $score(service_i)$ represents a score of a to-be-recommended service.

404: Display a target pattern in a UI, where the target pattern is a candidate pattern with a highest score.

The score of each candidate pattern may be obtained by using step 403, and a candidate pattern with a highest score is selected for display.

It can be learned from the embodiment corresponding to FIG. 4 that in the solution provided in embodiments of this application, a plurality of patterns are provided, and each pattern may be filled with cards of different sizes, to indicate different types of services. According to the solution provided in embodiments of this application, the score of each candidate pattern is calculated to display the candidate pattern with the highest score. When the score of the candidate pattern is calculated, not only a historical click-through rate is considered, but also a size of a display area in the candidate pattern is additionally considered. In other words, a size of a card indicating a service is additionally considered. In this way, for a service indicated by a large-size card, for example, a rich information service or a direct service, even if a historical click-through rate is low, because the corresponding size is large, a final score of a candidate pattern in which the service is located can be improved.

It should be noted that an execution sequence of step 401 to step 404 in the embodiment corresponding to FIG. 4 may be changed. An execution sequence of the steps is not limited in this embodiment of this application. For example, in a possible implementation, step 402 and step 403 may be synchronously performed, that is, after a candidate pattern is obtained, a score of the candidate pattern may be calculated, instead of calculating the score of each candidate pattern after all candidate patterns are obtained. For another example, in a possible implementation, step 401 and step 402 may be synchronously performed. When some services whose historical click-through rates rank top are obtained, step 402 may be synchronously performed. For example, after an application service whose historical click-through rate ranks first is obtained, step 402 may be performed, to add the application service whose historical click-through rate ranks first to a display area that meets a size of a card indicating the application service.

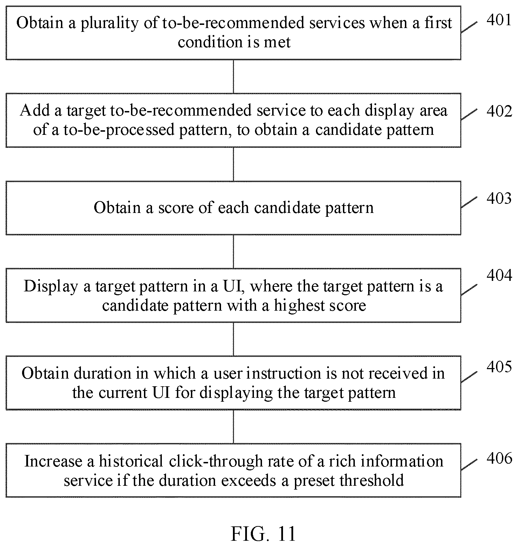

In addition, it should be noted that, in some possible scenarios, fewer or more steps may be included based on the steps described in the embodiment corresponding to FIG. 4. To further improve a probability that the rich information service is recommended for display, in a possible implementation, when the rich information service is added to a target pattern, as shown in FIG. 11, based on the embodiment described in FIG. 4, the method may further include the following steps.

405: Obtain duration in which a user instruction is not received in the current UI for displaying the target pattern.

406: Increase a historical click-through rate of the rich information service if the duration exceeds a preset threshold.

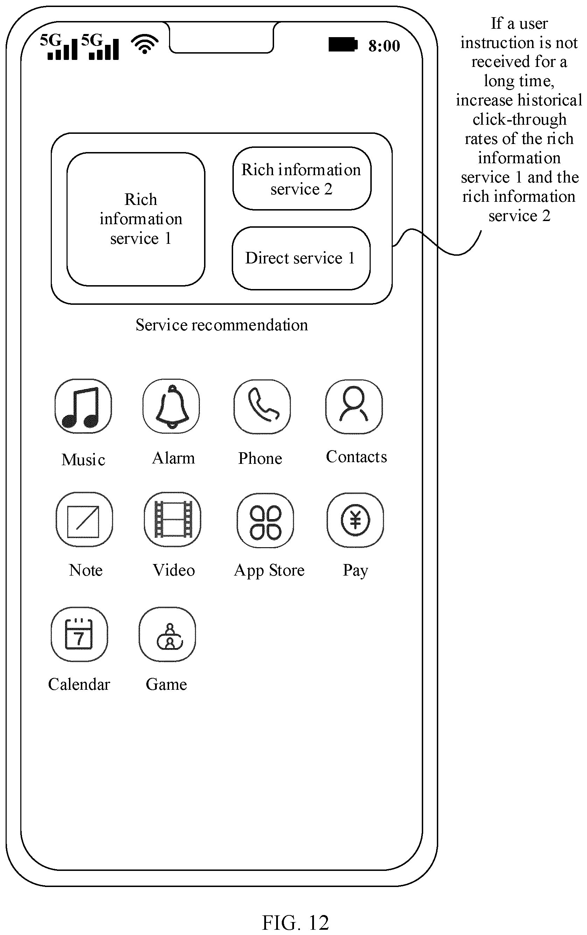

When the user stays, for more than specific duration, in the UI interface in which the target pattern is located, and does not deliver an instruction to the electronic device, it is considered that the user is currently browsing the rich information service in the target pattern to obtain information. In this case, a historical click-through rate of the rich information service is increased. That is, when the user stays, for more than specific duration, in the UI interface in which the target pattern is located, and does not deliver any instruction to the electronic device, it is considered that the user taps the rich information service in the target pattern. As shown in FIG. 12, in a possible implementation, when the target pattern includes a plurality of rich information services, if the user stays, for more than specific duration, in the UI interface in which the target pattern is located, and delivers no instruction to the electronic device, it is considered that the user is currently browsing all the rich information services in the target pattern, and a historical click-through rate of each rich information service in the target pattern increases, to increase consideration of the rich information service during next service recommendation. For example, the preset threshold described in step 506 is preset to 5 minutes. When the user stays, for more than 5 minutes, in the UI interface shown in FIG. 12, and does not deliver any instruction to the electronic device, for example, does not tap any icon in the UI interface shown in FIG. 12, and does not deliver another instruction, it is considered that the user is browsing a rich information service 1 or a rich information service 2, and historical click-through rates of the rich information service 1 and the rich information service 2 are increased.

In a possible implementation, to make a service recommended by the electronic device better meet a real requirement of the user, a service that may be currently tapped by the user may be further predicted by using a model. In this implementation, a training sample is obtained based on historical data, and the historical data is data generated when the user performs an operation on a to-be-recommended service historically. A first model is trained by using the training sample, the first model is used to predict a probability that a user performs an operation on the to-be-recommended service currently, and another positive correlation factor of the score of the to-be-recommended service is the probability, predicted by using the first model, that the user performs an operation on the to-be-recommended service currently. This implementation is also described with reference to FIG. 6. In a model training phase, a database 230 stores a training data set, and the database 230 may be specifically represented as a storage medium in any form, and is not limited to a database in a conventional sense. The training data set may include a plurality of training samples. There may be a plurality of channels for obtaining the training samples. This is not limited in embodiments of this application. For example, states (such as a Bluetooth on state, a data connected state, and a headset connected state) of a large quantity of electronic devices in different time periods and an actual operation of a user that is obtained by the electronic device in a corresponding time period may be collected as the training samples. A training device 220 generates a preset model, and performs iterative training on the preset model by using the training data set in the database, to obtain a mature model (model/rule 201). The mature model is a model that has been converged after iterative training, or a model obtained after a preset quantity of iterations is met. The mature model is sent to the electronic device. In an inference phase, when the electronic device is triggered to start a service recommendation procedure, current states (such as a Bluetooth on state, a data connected state, and a headset connected state) of the electronic device may be used as input of the model/rule 201, and the electronic device 210 may invoke the model/rule 201 to predict a probability that the user currently uses a to-be-recommended service. The probability, predicted by using the model, that the user performs an operation on the to-be-recommended service currently is a positive correlation factor of a score of the to-be-recommended service. In other words, the historical click-through rate of the service is only one positive correlation factor of the score of the service, and the score of the service may also have another positive correlation factor. For example, the probability, predicted by using the model, that the user performs an operation on each service (or the to-be-recommended service) currently is another positive correlation factor of the score of the service (or the to-be-recommended service). In a possible implementation, the probability, predicted by using the model, that the user uses the to-be-recommended service currently and a historical click-through rate of the to-be-recommended service may be weighted, to obtain the score of the to-be-recommended service.

It should be noted that the electronic device may continue to train the model based on a deviation between an actual operation of the user in the current time period and a predicted operation, so that the service that may be used by the user and that is predicted by the model/rule 201 is closer to the actual operation of the user. A data storage system 240 may store an actual operation of the user in a time period and each state of the electronic device in each time period. The model/rule 201 may be trained at intervals of preset duration based on data stored in the data storage system 240, to update the model/rule 201. It should be noted that in a possible implementation, because model training requires a large amount of computing power and depends on a large quantity of training samples, the training device and the electronic device 210 may be two different devices. Still with reference to FIG. 7, the training device 220 may be deployed in a cloud server. Communication may be established between the cloud server and each electronic device 210 (for example, an electronic device 1, an electronic device 2, an electronic device 3, an electronic device 4, and an electronic device n shown in FIG. 7, where n is a positive integer). Each electronic device sends, to the cloud server, each state of the electronic device and an actual operation of a user in each time period. The cloud server sends a trained model, that is, the model/rule 201, to each electronic device. It should be noted that the cloud server may perform update training on the model/rule 201 at intervals of preset duration based on data sent by each electronic device, to obtain an updated model/rule 201, and send each updated model/rule 201 to each electronic device. In addition, it should be noted that the user may specify that the electronic device is allowed to send data to the cloud server, or specify that the electronic device is not allowed to send data to the cloud server. The user may also choose to allow the cloud server to send data to the electronic device, or specify that the cloud server is not allowed to send data to the electronic device. When the user specifies that the electronic device is not allowed to send data to the cloud server, the electronic device does not send each state of the electronic device and the actual operation of the user to the cloud server after the electronic device enters the preset scenario. When the user specifies that the cloud server is not allowed to send data to the electronic device, the cloud server does not send the updated model/rule 201 to the electronic device, but the electronic device may still perform update training on a stored model/rule 201 based on data locally obtained by the electronic device. FIG. 6 and FIG. 7 are merely schematic diagrams of architectures provided in embodiments of the present invention. A location relationship between devices, components, modules, and the like shown in the figures does not constitute any limitation.

In a possible implementation, a priority may be further set for the direct service, the application service, or the rich information service, or a priority is set for each service. Another positive correlation factor of the score of the to-be-recommended service is a priority corresponding to the to-be-recommended service. The priority of the service may be stored in the cloud server, and the electronic device may obtain the priority of the service from the cloud server. When the priority of the service stored in the cloud server changes, the electronic device may obtain an updated priority of the service from the cloud server. In a possible implementation, a priority of the rich information service may be set to be higher than a priority of the application service. In a possible implementation, to ensure probabilities that the rich information service and the direct service are recommended for display, priorities of the rich information service and the direct service may be set to be higher than a priority of the application service. With reference to a specific example, the following describes how to obtain a score of a to-be-recommended service based on a priority of the to-be-recommended service, and obtain a score of a to-be-recommended service based on a historical click-through rate and a priority of the to-be-recommended service. In a possible implementation, it may be specified that the score of the to-be-recommended service is obtained based on only the priority of the to-be-recommended service. In this case, a higher priority of the to-be-recommended service indicates a higher score of the to-be-recommended service. In a possible implementation, it may be specified that the score of the to-be-recommended service is obtained based on the historical click-through rate and the priority of the to-be-recommended service.

It is assumed that the to-be-recommended services include a to-be-recommended service 1, a to-be-recommended service 2, and a to-be-recommended service 3. Scores of the to-be-recommended services are obtained in descending order of historical click-through rates. For example, a score of the to-be-recommended service 1 is a score 1, a score of the to-be-recommended service 2 is a score 2, and a score of the to-be-recommended service 3 is a score 3. It is assumed that a priority of the to-be-recommended service 2 is the highest and corresponds to a coefficient 0.9, a priority of the to-be-recommended service 3 is the second highest and corresponds to a coefficient 0.8, and a priority of the to-be-recommended service 1 is the lowest and corresponds to a coefficient 0.7. In this case, a final score of the to-be-recommended service 1 is 0.7*score 1, a final score of the to-be-recommended service 2 is 0.9*score 2, and a final score of the to-be-recommended service 3 is 0.8*score 3.

In a possible implementation, it may be further specified that a to-be-reminded service in the rich information service is preferentially displayed, to ensure that the to-be-reminded service is preferentially displayed if there is the to-be-reminded service. For example, only a pattern that can display a rich information service is selected from a plurality of patterns as a pattern for calculating a score. It is ensured that the to-be-reminded service can be displayed in the target pattern, and another service added to the target pattern other than the to-be-reminded service may be selected according to the implementation described in FIG. 4.

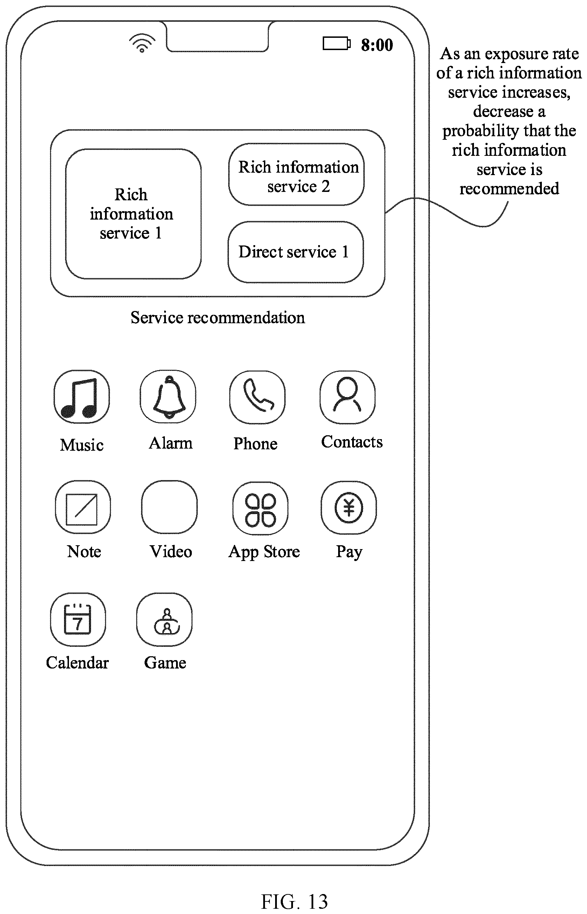

According to the method described in the foregoing embodiment, a probability that the rich information service or the direct service is recommended for display can be increased. In addition, in embodiments of this application, considering that the rich information service directly displays information to a user, as the exposure rate of the rich information service increases, there is a high probability that the user has obtained the information displayed by the rich information service. Therefore, in a possible implementation, the negative correlation factor of the score of the rich information service is the historical exposure rate of the rich information service. As the exposure rate of the rich information service increases, a probability that the rich information service is recommended is reduced. The following uses an example for description with reference to FIG. 13. If exposure duration is set to exceeding 1 hour but not exceeding 2 hours, the current score of the rich information service is multiplied by 0.9. If exposure duration exceeds 2 hours but does not exceed 5 hours, the current score of the rich information service is multiplied by 0.8. If exposure duration exceeds 5 hours, the current score of the rich information service is multiplied by 0. The current score of the rich information service is a score obtained based on another factor other than the historical exposure rate that affects the score. For example, the current score of the rich information service is a score obtained based on the historical click-through rate of the rich information service. In the candidate template shown in FIG. 13, if a historical exposure rate of a rich information service 1 exceeds 5 hours, a score of the rich information service 1 changes to 0. When the electronic device is triggered to start a service recommendation procedure next time, the rich information service 1 is not displayed. Therefore, longer exposure time indicates a lower score of the rich information service, and a probability that the rich information service is displayed is reduced.

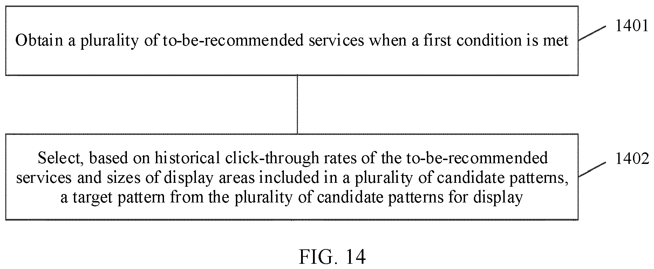

FIG. 14 is a schematic flowchart of another service recommendation method according to an embodiment of this application.

As shown in FIG. 14, the another service recommendation method provided in this embodiment of this application includes the following steps.

1401: Obtain a plurality of to-be-recommended services when a first condition is met.

Step 1401 may be understood with reference to step 401 in the embodiment corresponding to FIG. 4. Details are not described herein again.

1402: Select, based on historical click-through rates of the to-be-recommended services and sizes of display areas included in a plurality of candidate patterns, a target pattern from the plurality of candidate patterns for display.

The target to-be-recommended service is obtained, based on a historical click-through rate of the to-be-recommended service, from a to-be-recommended service indicated by a target card, and the target card is a card that has a same size as the display area in cards. The display area is used to add the target to-be-recommended service.

For step 1402, there may be the following detailed manners.

In a possible implementation, a score of each candidate pattern is obtained, where a positive correlation factor of the score of each candidate pattern is a size of a display area included in the candidate pattern, another positive correlation factor of the score of the candidate pattern is a score of a target to-be-recommended service added to the display area, and a positive correlation factor of a score of the target to-be-recommended service is a historical click-through rate of the target to-be-recommended service.

A candidate pattern with a highest score is selected from the plurality of candidate patterns as the target pattern for display.

In a possible implementation, based on a historical click-through rate of the target to-be-recommended service, the size of the display area included in the candidate pattern, and priorities of the plurality of to-be-recommended services, the target pattern is selected from the plurality of candidate patterns for display. The target to-be-recommended service is obtained, based on historical click-through rates of the to-be-recommended services and the priorities of the plurality of to-be-recommended services, from a to-be-recommended service indicated by a target card. For example, some to-be-recommended services may be obtained in descending order of historical click-through rates. Different priorities correspond to different coefficients. A higher priority indicates a larger coefficient. A score of a to-be-recommended service may be obtained based on a product of a score obtained based on a historical click-through rate of the to-be-recommended service and a coefficient corresponding to a priority corresponding to the to-be-recommended service, and some to-be-recommended services with high scores are used as final to-be-recommended services. The target card is a card that has a same size as the display area in cards. The display area is used to add a target to-be-recommended service. Each target to-be-recommended service corresponds to one priority, and a priority corresponding to a to-be-reminded service is the highest in priorities of all to-be-recommended services. The following provides a description with reference to a specific example. It is assumed that to-be-recommended services are obtained by performing step 1401, and include a to-be-recommended service 1, a to-be-recommended service 2, a to-be-recommended service 3, a to-be-recommended service 4, and a to-be-recommended service 5. Rankings of priorities of the to-be-recommended service 1 to the to-be-recommended service 5 are locally obtained from the electronic device or obtained from a cloud server and are as follows: The priority of the to-be-recommended service 3 is the highest and corresponds to a coefficient 0.9. The priority of the to-be-recommended service 2 is the second highest and corresponds to a coefficient 0.8. The priority of the to-be-recommended service 1 is the third highest and corresponds to a coefficient 0.7. The priority of the to-be-recommended service 4 is the fourth highest and corresponds to a coefficient 0.6. The priority of the to-be-recommended service 5 is the lowest and corresponds to a coefficient 0.5. It is assumed that scores of the to-be-recommended service 1 to the to-be-recommended service 5 obtained based on the historical click-through rates are respectively a score 1, a score 2, a score 3, a score 4, and a score 5. In this case, a final score of the to-be-recommended service 1 is 0.9*score 1, a final score of the to-be-recommended service 2 is 0.8*score 2, a final score of the to-be-recommended service 3 is 0.7*score 3, a final score of the to-be-recommended service 4 is 0.6*score 4, and a final score of the to-be-recommended service 5 is 0.5*score 5. The to-be-recommended service 1 to the to-be-recommended service 5 are ranked based on 0.9*score 1, 0.8*score 2, 0.7*score 3, 0.6*score 4, and 0.5*score 5. According to the scores of the to-be-recommended service 1 to the to-be-recommended service 5, a to-be-recommended service whose score is the highest and for which a size of a card indicating the to-be-recommended service matches a size of a display area is selected and added to each pattern, and a score of each candidate pattern is calculated. How to calculate the score of each candidate pattern is described above, and details are not described herein again.

It should be noted that the implementations described in the solutions provided in embodiments of this application may be combined. This is not limited in embodiments of this application.

For understanding of beneficial effects brought by the embodiment corresponding to FIG. 14, refer to beneficial effects brought by the embodiment corresponding to FIG. 4. Details are not described herein again.

The foregoing describes the solutions provided in embodiments of this application with reference to FIG. 4 to FIG. 14. For different electronic devices, a plurality of display patterns of different specifications are preconfigured. According to the solution provided in embodiments of this application, a target to-be-recommended service is added to each display pattern of a different specification, to obtain a candidate pattern. Finally, a candidate pattern with a highest score is displayed in a UI. In some possible implementations, after the candidate pattern with the highest score is determined, a location of a target to-be-recommended service added to the candidate pattern with the highest score may be further adjusted, so that the finally displayed candidate pattern with the highest score brings better experience to the user. With reference to a specific implementation, the following describes how to determine, in a candidate pattern with a highest score, a location of each target service added to the candidate pattern with the highest score. It should be noted that the solutions described in FIG. 4 to FIG. 14 may be combined with the following described solution of how to determine the location of each target service added to the candidate pattern with the highest score, or the solutions described in FIG. 4 to FIG. 14 may be separately implemented, and are not combined with the following described solution of how to determine the location of each target service added to the candidate pattern with the highest score. For better understanding of the solution, the following first describes consideration that a location of a target to-be-recommended service added to the candidate pattern with the highest score needs to be adjusted.

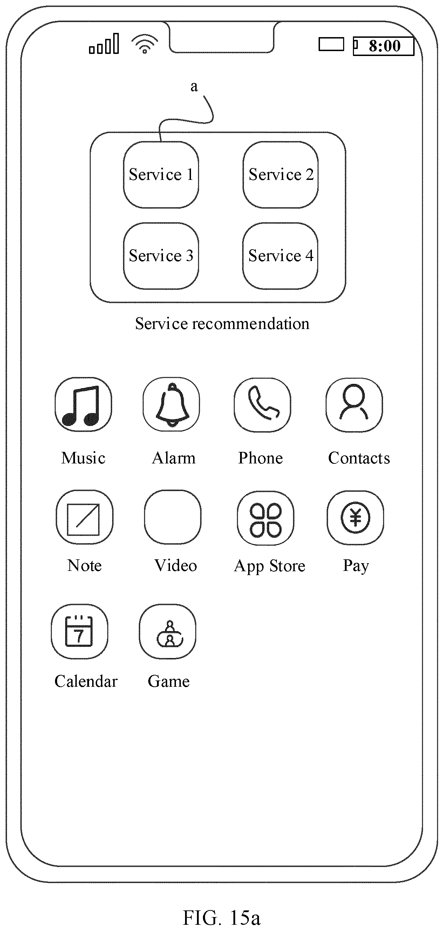

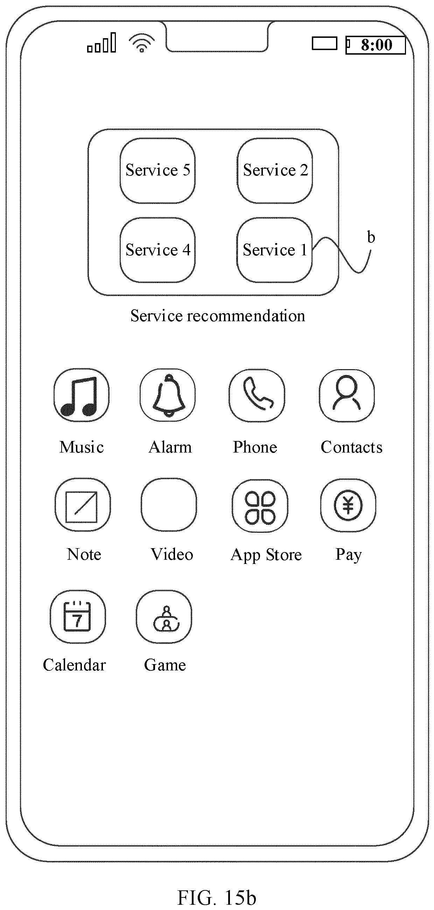

According to the solutions described in FIG. 4 to FIG. 14, the electronic device may be triggered in different manners, to start a service recommendation procedure. Each time after the electronic device is triggered to start a service recommendation procedure, after the solutions described in FIG. 4 to FIG. 14 are performed, the target to-be-recommended service may change, and consequently, the target to-be-recommended service displayed in the candidate pattern with the highest score may also change accordingly. In this case, a dilemma may occur. Refer to FIG. 15a and FIG. 15b. For example, the electronic device is triggered for the first time, and a service recommendation procedure is started. A pattern shown in FIG. 15a is displayed, and a service 1, a service 2, a service 3, and a service 4 are specifically displayed. The electronic device is triggered for the second time, and a service recommendation procedure is started. A pattern shown in FIG. 15b is displayed, and the service 1, the service 2, the service 4, and a service 5 are specifically displayed. For how to determine a displayed pattern and a specific service displayed in the pattern, refer to the solutions described in FIG. 4 to FIG. 15 for understanding. Details are not described herein again. In the pattern shown in FIG. 15a, the service 1 is at a location a. In the pattern shown in FIG. 15b, the location of the service 1 changes, and the service 1 is at a location b. Therefore, this may cause trouble to the user. The user may be accustomed to tapping the service 1 at the location a. Each time after a service recommendation procedure is started, if a location of a service in a previously displayed pattern continuously changes, efficiency of tapping the service by the user may be affected.

Therefore, based on the foregoing consideration, in embodiments of this application, stability of the to-be-recommended service may be further scored. The stability herein indicates a probability that the to-be-recommended service is continuously displayed after the electronic device starts a service recommendation procedure next time. The higher probability that the service is continuously displayed indicates higher stability of the service. In this case, it may be considered that locations of these high-stability services are adjusted to front location in the pattern, and after the electronic device starts a service recommendation procedure next time, if the service is still displayed, a location of the service in the pattern remains unchanged, so that the user can expect the location of the service in the pattern, thereby improving efficiency of tapping the service by the user. With reference to a specific embodiment, the following describes how to determine, based on stability, a location of each target service added to a candidate pattern with a highest score.

In a possible implementation, a location of a service in a pattern may be determined in different manners based on different channels for obtaining the service in the pattern. As described above, to-be-recommended services may be obtained through different channels. For example, a plurality of different services are obtained from one or more channels in a service interest list, a historical click-through rate list, or a reminder service list, and deduplication processing is performed on the services obtained from the different channels, to obtain a to-be-recommended service. Stability of services obtained from different channels may differ significantly. Therefore, in this implementation, for different obtaining channels, the stability of the service is determined in different manners. For example, it is assumed that a candidate pattern having a highest score currently is a first target pattern, and the first target pattern includes a service 1, a service 2, a service 3, and a service 4. It is assumed that service 1 is obtained from the service interest list. Because the service interest list is a plurality of services recently used by the user, when the latest service used by the user changes, the service 1 is replaced. Generally, the latest service used by the user is not stable. It may be considered that a probability that the service 1 is replaced is very high, or it is considered that a probability that the service 1 is continuously recommended next time is not very high. Therefore, in embodiments of this application, it is considered that stability of the service 1 is low. In this implementation, when a service is obtained from the service interest list, it is considered that stability of the service is lower than that of a service obtained from another channel. In addition, when a plurality of services are all obtained from the service interest list, in the plurality of services, a service with a lower historical click-through rate has lower stability. In a possible implementation, stability of a service may be evaluated in different manners. For example, the following describes, with reference to three manners, how to evaluate stability of a service.

In a possible implementation, stability of a service may be evaluated based on historical use duration of the service before a current moment. Longer historical use duration of the service before the current moment indicates higher stability of the service, and shorter historical use duration of the service before the current moment indicates lower stability of the service. Higher stability of the service indicates a higher location ranking (sometimes also referred to as a location rank in this application) of the service in a pattern. A location ranking may be preset. For example, a location of the first row and the first column is a location ranking first in the pattern, a location of the first row and the second column is a location ranking second in the pattern, and so on. For another example, it may be specified that a location of the first row and the first column is a location ranking first in the pattern, a location of the second row and the first column is a location ranking second in the pattern, a location of the first row and the second column is a location ranking third in the pattern, a location of the second row and the second column is a location ranking fourth in the pattern, and so on. It is assumed that a location of the first row and the first column is a location ranking first in the pattern, a location of the first row and the second column is a location ranking second in the pattern, and so on. It is further assumed that the candidate pattern with the highest score includes a service 1, a service 2, a service 3, and a service 4. Historical use duration of the services before a current moment corresponds to the service 1, the service 2, the service 3, and the service 4 in descending order. Herein, it may be understood with reference to FIG. 15a that the service 1 is at a location ranking first in the candidate pattern with the highest score, the service 2 is at a location ranking second in the candidate pattern with the highest score, the service 3 is at a location ranking third in the candidate pattern with the highest score, and the service 4 is at a location ranking fourth in the candidate pattern with the highest score.

In a possible implementation, a location ranking of the service in the target pattern is positively correlated with historical use duration of the service in a first time period. For example, it is assumed that a candidate pattern having a highest score currently is a first target pattern, and the first target pattern includes a service 1, a service 2, a service 3, and a service 4. It is assumed that the first time period is use duration of each service within 2 hours after the current moment in the historical use duration. It is assumed that in the first time period, use duration of the service 1, the service 2, the service 3, and the service 4 decreases successively. In this case, stability of the service 1, the service 2, the service 3, and the service 4 decreases successively. For how to determine the location of the service based on the stability of the service, refer to the foregoing embodiment for understanding. Details are not described below. It should be noted that the first time period listed above is merely an example for description, and may be specifically set according to an actual situation. For example, the first time period may be alternatively set to 1 hour before the current moment and 1 hour after the current moment in the historical duration. For another example, the first time period may be alternatively set to use duration of each service within 1 hour after the current moment in the historical duration.

In a possible implementation, the location ranking of the service in the target pattern is positively correlated with the historical click-through rate of the service. In other words, in this implementation, the stability of the service is evaluated based on the historical click-through rate of the service. A higher historical click-through rate of the service indicates higher stability of the service. For example, it is assumed that a candidate pattern having a highest score currently is a first target pattern, and the first target pattern includes a service 1, a service 2, a service 3, and a service 4. Historical click-through rates of the four services correspond to the service 1, the service 2, the service 3, and the service 4 in descending order. It is considered that stability of the four services corresponds to the service 1, the service 2, the service 3, and the service 4 in descending order. In this case, the service 1 is displayed in the first place in the first target pattern, and the service 4 is displayed in the last place in the first target pattern.

In a possible implementation, the stability of the service may be evaluated based on a ratio, where the ratio may be a ratio of historical use duration of the service before the current moment to the historical click-through rate of the service. A higher ratio indicates higher stability of the service. A lower ratio indicates lower stability of the service. The ratio may alternatively be a ratio of a difference between maximum duration and used duration to the historical click-through rate of the service. A higher ratio indicates higher stability of the service. A lower ratio indicates lower stability of the service. The following explains the maximum duration and the used duration: Duration of one day may be divided into different time periods according to a requirement. For example, a time period is from 2 to 4, and a time period is from 4 to 6. The maximum duration is duration of the time period, and the used duration is duration from a start moment of the current time period to a current moment.

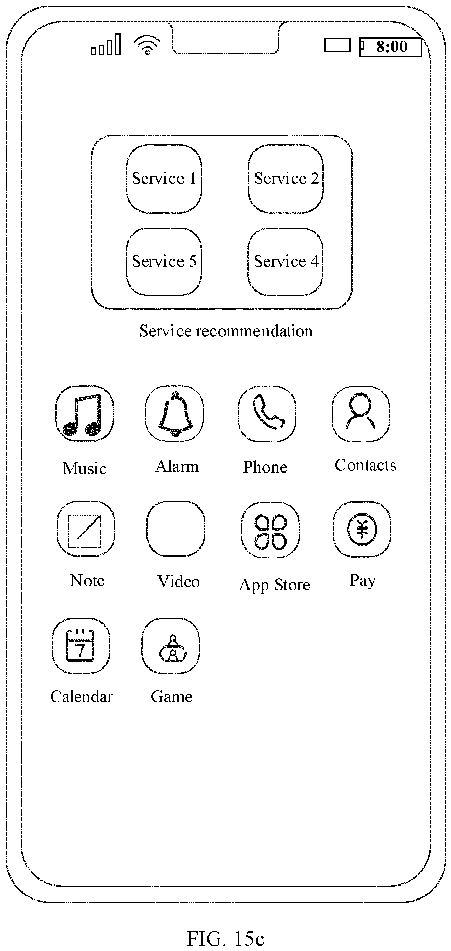

According to the solution provided in embodiments of this application, a location of each target service added to a candidate pattern with a highest score may be determined based on service stability, thereby improving user experience. The foregoing describes, with reference to FIG. 15a and FIG. 15b, that the location of the service 1 changes and the service 1 is at the location b. Therefore, this may cause trouble to the user. The user may be accustomed to tapping the service 1 at the location a. Each time after a service recommendation procedure is started, if a location of a service in a previously displayed pattern continuously changes, efficiency of tapping the service by the user may be affected. According to the solution provided in embodiments of this application, the pattern shown in FIG. 15b may be the same as the pattern shown in FIG. 15a, and the patterns shown in FIG. 15b and FIG. 15a each include a service 1, a service 2, and a service 4. A pattern displayed last time is shown in FIG. 15a. In this case, according to the embodiment of determining a location of a service based on stability of the service in embodiments of this application, locations of the service 1, the service 2, and the service 4 remain unchanged in the pattern displayed this time. Still refer to FIG. 15c. The pattern shown in FIG. 15c is the pattern shown in FIG. 15b. A difference lies in that a location of each service in the pattern in FIG. 15c is different from a location of each service in the pattern in FIG. 15b. A specific difference lies in that when the service shown in FIG. 15b is the same as the service shown in FIG. 15a, a same location of the same service in the pattern shown in FIG. 15b and the pattern shown in FIG. 15a is not maintained. When the service shown in FIG. 15c is the same as the service shown in FIG. 15a, the same service is kept at a same location in the pattern shown in FIG. 15c and the pattern shown in FIG. 15a.

In addition, in some possible implementations, a current candidate pattern with a highest score may be a candidate pattern different from a previous candidate pattern with a highest score. For these cases, if a same service still has a corresponding location in the current candidate pattern with the highest score, the location remains unchanged;

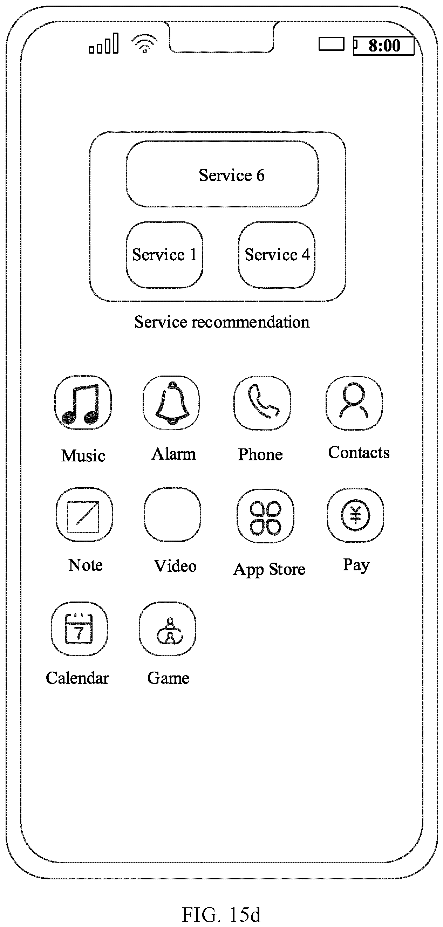

or if a same service does not have a corresponding location in the current candidate pattern with the highest score, the same service is placed at another location. Refer to FIG. 15d and FIG. 15a. It is assumed that the current candidate pattern with the highest score is shown in FIG. 15d, and a structure of the pattern may have changed compared with the previous candidate pattern with the highest score in FIG. 15a. It is assumed that to-be-recommended services included in FIG. 15d are a service 1, a service 4, and a service 6. The service 1 and the service 4 are the same as those included in FIG. 15a. For the candidate pattern shown in FIG. 15d and the candidate pattern shown in FIG. 15a, the service 4 may always remain at a same location, and in the candidate pattern shown in FIG. 15d, the location of the service 4 is maintained. In addition, in the candidate pattern shown in FIG. 15d, a same location of the service 1 in the candidate pattern shown in FIG. 15a does not exist. Therefore, in the candidate pattern shown in FIG. 15d, the location of the service 1 may be changed compared with the location of the service 1 in the candidate pattern shown in FIG. 15a.

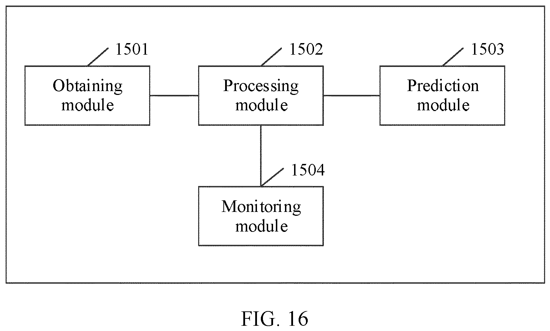

FIG. 16 shows another embodiment of an electronic device according to an embodiment of this application. The electronic device includes: an obtaining module 1501, configured to obtain a plurality of to-be-recommended services when a first condition is met, where the plurality of to-be-recommended services include at least one of a rich information service, a direct service, or an application service, each to-be-recommended service is indicated by using a card of at least one size, and a size of a card indicating the rich information service or the direct service is greater than a size of a card indicating the application service; and a processing module 1502, configured to select, based on historical click-through rates of the plurality of to-be-recommended services obtained by the obtaining module 1501 and sizes of display areas included in a plurality of candidate patterns, a target pattern from the plurality of candidate patterns for display.

In a possible implementation, different types of to-be-recommended services correspond to different sizes, and a to-be-recommended service displayed in the target pattern is a to-be-recommended service that matches a size of each display area in the target pattern.

In a possible implementation, the processing module 1502 is specifically configured to: obtain a score of each candidate pattern in the plurality of candidate patterns, where a positive correlation factor of the score of the candidate pattern is a size of a display area included in the candidate pattern, another positive correlation factor of the score of the candidate pattern is a score of a to-be-added service in the display area, and the score of the to-be-added service is positively correlated with a historical click-through rate; and select a candidate pattern with a highest score from the plurality of candidate patterns as the target pattern for display.

In a possible implementation, if the to-be-added service includes a rich information service, a score of the to-be-added rich information service is negatively correlated with a historical exposure rate of the rich information service.

In a possible implementation, the electronic device further includes a prediction module 1503, and the prediction module 1503 is configured to predict, by using a first model, a probability that a user performs an operation on each to-be-recommended service currently. The processing module 1502 is specifically configured to select, based on the historical click-through rates of the plurality of to-be-recommended services, the sizes of the display areas included in the plurality of candidate patterns, and the probability, the target pattern from the plurality of candidate patterns for display.

In a possible implementation, the electronic device further includes a monitoring module 1504, and the monitoring module 1504 is configured to: when the rich information service is added to the target pattern, obtain duration in which a user instruction is not received in a current user interface UI for displaying the target pattern. The processing module 1502 is further configured to increase a historical click-through rate of the rich information service if the duration exceeds a preset threshold.

In a possible implementation, the rich information service includes a to-be-reminded service, and the processing module 1502 is specifically configured to select, based on the historical click-through rates of the plurality of to-be-recommended services, the sizes of the display areas included in the plurality of candidate patterns, and priorities of the plurality of to-be-recommended services, the target pattern from the plurality of candidate patterns for display.

In a possible implementation, the first condition includes at least one of switching from a screen-locked state to an unlocked state, a device being in a preset scenario, or occurrence of a change in a status of one or more of the plurality of to-be-recommended services, where N is a positive integer, and a determining factor of the preset scenario includes at least one of time and a geographical location.

In a possible implementation, the obtaining module 1501 is specifically configured to obtain a plurality of different to-be-recommended services from a service interest list, a historical click-through rate list, or a reminder service list when the first condition is met, where the service interest list includes a plurality of services recently used by the user, the historical click-through rate list includes a plurality of services with high historical click-through frequency of the user, and the reminder service list includes a to-be-reminded service monitored by the device.

In a possible implementation, when it is learned that the device is in the preset scenario, the plurality of different to-be-recommended services further include a plurality of services obtained from a scenario-bound service list, and the scenario-bound service list includes a plurality of services bound to the preset scenario.

An embodiment of this application further provides a chip system. The chip system includes a processor, configured to support an electronic device in implementing functions in the foregoing aspects, for example, sending or processing data and/or information in the foregoing methods. In a possible design, the chip system further includes a memory. The memory is configured to store necessary program instructions and data. The chip system may include a chip, or may include a chip and another discrete component.

An embodiment of this application further provides a processor, coupled to a memory, and configured to perform the method and the function that are related to the electronic device in any one of the foregoing embodiments.

An embodiment of this application further provides a computer-readable storage medium. The computer-readable storage medium stores a computer program. When the computer program is executed by a computer, the method procedure related to the electronic device in any one of the foregoing method embodiments is implemented. Correspondingly, the computer may be the electronic device.

It may be clearly understood by a person skilled in the art that, for the purpose of convenient and brief description, for a detailed working process of the foregoing described system, apparatus, and unit, refer to a corresponding process in the foregoing method embodiment. Details are not described herein again.

In the several embodiments provided in embodiments of this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form. The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, function units in embodiments of this application may be integrated into one processing unit, or each unit may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In the specification, claims, and accompanying drawings of embodiments of this application, terms "first", "second", and the like are intended to distinguish between similar objects but do not necessarily indicate a specific order or sequence. It should be understood that the data used in such a way are interchangeable in appropriate circumstances so that the embodiments described herein can be implemented in other orders than the order illustrated or described herein. The term "and/or" in embodiments of this application merely describes an association relationship of associated objects, and indicates that three relationships may exist. For example, A and/or B may indicate the following three cases: Only A exists, both A and B exist, and only B exists. In addition, the character "/" in this specification usually indicates an "or" relationship between the associated objects. In addition, the terms "include", "have", and any variants thereof are intended to cover non-exclusive inclusion. For example, a process, method, system, product, or device including a series of steps or modules is not necessarily limited to those clearly listed steps or modules, but may include other steps or modules that are not clearly listed or are inherent to the process, method, product, or device. Names or numbers of steps in embodiments of this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Division into the modules in embodiments of this application is logical division. In actual application, there may be another division manner. For example, a plurality of modules may be combined or integrated into another system, or some features may be ignored or not performed. In addition, the displayed or discussed mutual coupling or direct coupling or communication connection may be implemented through some ports, and the indirect coupling or communication connection between modules may be in an electrical form or another similar form. This is not limited in embodiments of this application. In addition, modules or submodules described as separate components may be or may not be physically separated, may be or may not be physical modules, or may be distributed into a plurality of circuit modules. Objectives of embodiments of this application may be achieved by selecting some or all of the modules according to actual requirements.

**Claims**

1.  A service recommendation method, comprising:

    obtaining a plurality of to-be-recommended services when a first condition is met, wherein the plurality of to-be-recommended services comprise at least one of a rich information service, a direct service, or an application service, each to-be-recommended service is indicated by using a card of at least one size, and a size of a card indicating the rich information service or the direct service is greater than a size of a card indicating the application service; and
    selecting, based on historical click-through rates of the plurality of to-be-recommended services and sizes of display areas comprised in a plurality of candidate patterns, a target pattern from the plurality of candidate patterns for display.

2.  The method according to claim 1, wherein different types of to-be-recommended services correspond to different sizes, and a to-be-recommended service displayed in the target pattern is a to-be-recommended service that matches a size of each display area in the target pattern.

3.  The method according to claim 1 or 2, wherein the selecting, based on historical click-through rates of the plurality of to-be-recommended services and sizes of display areas comprised in a plurality of candidate patterns, a target pattern from the plurality of candidate patterns for display comprises:

    obtaining a score of each candidate pattern in the plurality of candidate patterns, wherein a positive correlation factor of the score of the candidate pattern is a size of a display area comprised in the candidate pattern, another positive correlation factor of the score of the candidate pattern is a score of a to-be-added service in the display area, and the score of the to-be-added service is positively correlated with a historical click-through rate; and
    selecting a candidate pattern with a highest score from the plurality of candidate patterns as the target pattern for display.

4.  The method according to claim 3, wherein if the to-be-added service comprises a rich information service, a score of the to-be-added rich information service is negatively correlated with a historical exposure rate of the rich information service.

5.  The method according to any one of claims 1 to 4, wherein the method further comprises:

    predicting, by using a first model, a probability that a user performs an operation on each to-be-recommended service currently; and
    the selecting, based on historical click-through rates of the plurality of to-be-recommended services and sizes of display areas comprised in a plurality of candidate patterns, a target pattern from the plurality of candidate patterns for display comprises:
    selecting, based on the historical click-through rates of the plurality of to-be-recommended services, the sizes of the display areas comprised in the plurality of candidate patterns, and the probability, the target pattern from the plurality of candidate patterns for display.

6.  The method according to any one of claims 1 to 5, wherein when the rich information service is added to the target pattern, the method further comprises:

    obtaining duration in which a user instruction is not received in a current user interface UI for displaying the target pattern; and
    increasing a historical click-through rate of the rich information service if the duration exceeds a preset threshold.

7.  The method according to any one of claims 1 to 6, wherein when the rich information service comprises a to-be-reminded service, and the plurality of to-be-recommended services comprise the to-be-reminded service, the selecting, based on historical click-through rates of the plurality of to-be-recommended services and sizes of display areas comprised in a plurality of candidate patterns, a target pattern from the plurality of candidate patterns for display comprises:
    selecting, based on the historical click-through rates of the plurality of to-be-recommended services, the sizes of the display areas comprised in the plurality of candidate patterns, and priorities of the plurality of to-be-recommended services, the target pattern from the plurality of candidate patterns for display.

8. The method according to any one of claims 1 to 7, wherein the first condition comprises at least one of switching from a screen-locked state to an unlocked state, a device being in a preset scenario, or occurrence of a change in a status of one or more of the plurality of to-be-recommended services, wherein N is a positive integer, and a determining factor of the preset scenario comprises at least one of time and a geographical location.

9. The method according to any one of claims 1 to 8, wherein the obtaining a plurality of to-be-recommended services when a first condition is met comprises:
obtaining a plurality of different to-be-recommended services from a service interest list, a historical click-through rate list, or a reminder service list when the first condition is met, wherein the service interest list comprises a plurality of services recently used by the user, the historical click-through rate list comprises a plurality of services with high historical click-through frequency of the user, and the reminder service list comprises a to-be-reminded service monitored by the device.

10. The method according to claim 9, wherein when it is learned that the device is in the preset scenario, the plurality of different to-be-recommended services further comprise a plurality of services obtained from a scenario-bound service list, and the scenario-bound service list comprises a plurality of services bound to the preset scenario.

11. The method according to any one of claims 1 to 10, wherein the target pattern is a first target pattern, and the method further comprises:

when the first condition is met again, selecting a second target pattern from the plurality of candidate patterns for display; and
when both the first target pattern and the second target pattern comprise a first to-be-recommended service, keeping a location of the first to-be-recommended service in the second target pattern the same as a location of the first to-be-recommended service in the first target pattern.

12. The method according to any one of claims 1 to 11, wherein the method further comprises:
determining a location of the to-be-recommended service in the target pattern in a different manner based on a different obtaining channel of the to-be-recommended service in the target pattern, wherein the obtaining channel comprises the service interest list, the historical click-through rate list, or the reminder service list.

13. The method according to claim 12, wherein a location ranking of the to-be-recommended service in the target pattern is negatively correlated with a historical click-through rate of the to-be-recommended service.

14. The method according to claim 12, wherein a location ranking of the to-be-recommended service in the target pattern is positively correlated with historical use duration of the to-be-recommended service in a first time period, and the first time period comprises a moment at which the first condition is met.

15. An electronic device, comprising:

an obtaining module, configured to obtain a plurality of to-be-recommended services when a first condition is met, wherein the plurality of to-be-recommended services comprise at least one of a rich information service, a direct service, or an application service, each to-be-recommended service is indicated by using a card of at least one size, and a size of a card indicating the rich information service or the direct service is greater than a size of a card indicating the application service; and
a processing module, configured to select, based on historical click-through rates of the plurality of to-be-recommended services obtained by the obtaining module and sizes of display areas comprised in a plurality of candidate patterns, a target pattern from the plurality of candidate patterns for display.

16. The electronic device according to claim 15, wherein different types of to-be-recommended services correspond to different sizes, and a to-be-recommended service displayed in the target pattern is a to-be-recommended service that matches a size of each display area in the target pattern.

17. The electronic device according to claim 15 or 16, wherein the processing module is specifically configured to:

obtain a score of each candidate pattern in the plurality of candidate patterns, wherein a positive correlation factor of the score of the candidate pattern is a size of a display area comprised in the candidate pattern, another positive correlation factor of the score of the candidate pattern is a score of a to-be-added service in the display area, and the score of the to-be-added service is positively correlated with a historical click-through rate; and select a candidate pattern with a highest score from the plurality of candidate patterns as the target pattern for display.

18. The electronic device according to claim 17, wherein if the to-be-added service comprises a rich information service, a score of the to-be-added rich information service is negatively correlated with a historical exposure rate of the rich information service.

19. The electronic device according to any one of claims 15 to 18, wherein the electronic device further comprises a prediction module, and the prediction module is configured to:

predict, by using a first model, a probability that a user performs an operation on each to-be-recommended service currently; and
the processing module is specifically configured to:
select, based on the historical click-through rates of the plurality of to-be-recommended services, the sizes of the display areas comprised in the plurality of candidate patterns, and the probability, the target pattern from the plurality of candidate patterns for display.

20. The electronic device according to any one of claims 15 to 19, wherein the electronic device further comprises a monitoring module, and the monitoring module is configured to:

when the rich information service is added to the target pattern, obtain duration in which a user instruction is not received in a current user interface UI for displaying the target pattern; and
the processing module is further configured to increase a historical click-through rate of the rich information service if the duration exceeds a preset threshold.

21. The electronic device according to any one of claims 15 to 20, wherein the rich information service comprises a to-be-reminded service, and the processing module is specifically configured to:
select, based on the historical click-through rates of the plurality of to-be-recommended services, the sizes of the display areas comprised in the plurality of candidate patterns, and priorities of the plurality of to-be-recommended services, the target pattern from the plurality of candidate patterns for display.

22. The electronic device according to any one of claims 15 to 21, wherein the first condition comprises at least one of switching from a screen-locked state to an unlocked state, a device being in a preset scenario, or occurrence of a change in a status of one or more of the plurality of to-be-recommended services, wherein N is a positive integer, and a determining factor of the preset scenario comprises at least one of time and a geographical location.

23. The electronic device according to any one of claims 15 to 22, wherein the obtaining module is specifically configured to:
obtain a plurality of different to-be-recommended services from a service interest list, a historical click-through rate list, or a reminder service list when the first condition is met, wherein the service interest list comprises a plurality of services recently used by the user, the historical click-through rate list comprises a plurality of services with high historical click-through frequency of the user, and the reminder service list comprises a to-be-reminded service monitored by the device.

24. The electronic device according to claim 23, wherein when it is learned that the device is in the preset scenario, the plurality of different to-be-recommended services further comprise a plurality of services obtained from a scenario-bound service list, and the scenario-bound service list comprises a plurality of services bound to the preset scenario.

25. The electronic device according to any one of claims 15 to 24, wherein the obtaining module is further configured to:

when the first condition is met again, select a second target pattern from the plurality of candidate patterns for display; and
the processing module is further configured to: when both the first target pattern and the second target pattern comprise a first to-be-recommended service, keep a location of the first to-be-recommended service in the second target pattern the same as a location of the first to-be-recommended service in the first target pattern.

26. The electronic device according to any one of claims 15 to 25, wherein the processing module is further configured to:

determine a location of the to-be-recommended service in the target pattern in a different manner based on a different obtaining channel of the to-be-recommended service in the target pattern, wherein the obtaining channel comprises the service interest list, the historical click-through rate list, or the reminder service list.

27. The electronic device according to claim 26, wherein a location ranking of the to-be-recommended service in the target pattern is negatively correlated with a historical click-through rate of the to-be-recommended service.

28. The electronic device according to claim 26, wherein a location ranking of the to-be-recommended service in the target pattern is positively correlated with historical use duration of the to-be-recommended service in a first time period, and the first time period comprises a moment at which the first condition is met.

29. An electronic device, comprising:

a memory, configured to store computer-readable instructions; and
a processor coupled to the memory, configured to execute the computer-readable instructions in the memory to perform the method according to any one of claims 1 to 14.

30. A computer-readable storage medium, comprising a program, wherein when the program is run on a computer, the computer is enabled to perform the method according to any one of claims 1 to 14.

31. A chip, wherein the chip is coupled to a memory, and is configured to execute a program stored in the memory, to perform the method according to any one of claims 1 to 14.

FIG. 1a

FIG. 1b

Application service:
Obtain a
corresponding
service by tapping an
icon corresponding
to the application
service

FIG. 2a

Market

First avenue

Primary school

Second avenue

Direct service:
Tap an icon
corresponding to
a direct service,
tap and play

Taxi

Ride code

FIG. 2b

← Air ticket

| Next 30 days ▾ | From Shenzhen ▾ |

| Domestic hit | **Domestic low price list** | Domestic discount list |
|---|---|---|
| Shenzhen ⟶ Nanning Saturday, May 29 | | 75% discount ¥ 240 |
| Shenzhen ⟶ Shanghai Sunday, June 13 | | 82% discount ¥ 320 |
| Shenzhen ⟶ Haikou Sunday, May 30 | | 76% discount ¥ 348 |
| Shenzhen ⟶ Hangzhou Sunday, June 13 | | 77% discount ¥ 375 |

Rich information service: Directly display information content

FIG. 2c

Electronic device 100

FIG. 3

Obtain a plurality of to-be-recommended services when a first condition is met — 401

Add a target to-be-recommended service to each display area of a to-be-processed pattern, to obtain a candidate pattern — 402

Obtain a score of each candidate pattern — 403

Display a target pattern in a UI, where the target pattern is a candidate pattern with a highest score — 404

FIG. 4

Initiation of a service recommendation procedure is triggered

Obtain a plurality of services from a plurality of channels

Service interest list

Historical click-through rate

Reminder service list

Scenario-bound service list

Deduplication processing

To-be-recommended service

FIG. 5

Database 230 → Training device 220

Model/Rule 201

↑

Data storage system 240 ↔

Electronic device 210

FIG. 6

Cloud server

Electronic device 1

Electronic device 2

Electronic device 3

Electronic device 4

...

Electronic device n

FIG. 7

| Specification of a service recommendation area | Pattern | Card of a size 1 | Card of a size 2 | Card of a size 3 |
|---|---|---|---|---|
| First specification | | 4 | 0 | 0 |
| | | 2 | 1 | 0 |
| | | 0 | 2 | 0 |
| | | 0 | 0 | 1 |

FIG. 8a

| Specification of a service recommendation area | Pattern | Card of a size 1 | Card of a size 4 | Card of a size 5 | Card of a size 6 |
|---|---|---|---|---|---|
| Second specification | | 10 | 0 | 0 | 0 |
| | | 4 | 2 | 0 | 0 |
| | | 4 | 0 | 1 | 0 |
| | | 0 | 0 | 0 | 4 |
| | | 0 | 0 | 1 | 2 |

FIG. 8b

| Specification of a service recommendation area | Pattern | Card of a size 1 | Card of a size 2 | Card of a size 7 |
|---|---|---|---|---|
| Third specification | | 4 | 0 | 0 |
| | | 2 | 2 | 0 |
| | | 0 | 3 | 0 |
| | | 0 | 0 | 1 |

FIG. 8c

| Specification of a service recommendation area | Pattern | Card of a size 1 | Card of a size 2 | Card of a size 7 |
|---|---|---|---|---|
| Fourth specification | | 6 | 3 | 0 |
| | | 6 | 0 | 1 |
| | | 0 | 6 | 0 |
| | | 0 | 3 | 1 |

FIG. 8d

| Specification of a service recommendation area | Pattern | Card of a size 1 | Card of a size 4 | Card of a size 5 |
|---|---|---|---|---|
| Fifth specification | | 6 | 0 | 0 |
| | | 3 | 1 | 0 |
| | | 0 | 2 | 0 |
| | | 0 | 0 | 1 |

FIG. 8e

| Specification of a service recommendation area | Pattern | Card of a size 1 | Card of a size 2 | Card of a size 3 |
|---|---|---|---|---|
| Sixth specification | | 4 | 2 | 0 |
| | | 4 | 0 | 1 |
| | | 0 | 4 | 0 |
| | | 0 | 2 | 1 |

FIG. 8f

Display a target pattern: candidate pattern with a highest score

| Candidate pattern 1: service 1 to service 4 | Candidate pattern 2: service 1, service 2, service 5 | Candidate pattern 3: service 5, service 7 | Candidate pattern 4: service 9 |

Pattern 1

Pattern 2

Pattern 3

Pattern 4

Allow to put a card of only a size 1

Allow to put a card of a size 1 and a card of a size 2

Allow to put a card of only a size 2

Allow to put a card of only a size 3

In descending order of historical click-through rates

Service 1 (application service)

Service 2 (application service)
Service 3 (application service)
Service 4 (application service)
Service 5 (direct service)
Service 6 (application service)
Service 7 (direct service)
Service 8 (application service)

Service 9 (rich information service)

Service 10 (rich information service)

...

FIG. 9

EP 4 336 383 A1

Display a target pattern: candidate pattern with a highest score

⇑

Candidate pattern 6: service 6, service 10

Candidate pattern 3: service 1, service 2, service 10

Candidate pattern 5: service 10, service 11

Candidate pattern 1: service 1 to service 4

Candidate pattern 2: service 1, service 2, service 6

Candidate pattern 4: service 6, service 7

Candidate pattern 7: service 8

Pattern 1 ⇑

Pattern 2 ⇑

Pattern 3 ⇑

Pattern 4 ⇑

Allow to put a card of only a size 1

Allow to put a card of a size 1 and a card of a size 2

Allow to put a card of only a size 2

Allow to put a card of only a size 3

In descending order of historical click-through rates

Service 1 (application service)

Service 2 (application service)

Service 3 (application service)

Service 4 (application service)

Service 5 (application service)

...

In descending order of historical click-through rates

Service 6 (direct service)

Service 7 (direct service)

Service 8 (direct service)

Service 9 (direct service)

...

In descending order of historical click-through rates

Service 10 (rich information service)

Service 11 (rich information service)

...

FIG. 10

EP 4 336 383 A1

Obtain a plurality of to-be-recommended services when a first condition is met ⟋ 401

Add a target to-be-recommended service to each display area of a to-be-processed pattern, to obtain a candidate pattern ⟋ 402

Obtain a score of each candidate pattern ⟋ 403

Display a target pattern in a UI, where the target pattern is a candidate pattern with a highest score ⟋ 404

Obtain duration in which a user instruction is not received in the current UI for displaying the target pattern ⟋ 405

Increase a historical click-through rate of a rich information service if the duration exceeds a preset threshold ⟋ 406

FIG. 11

If a user instruction is not received for a long time, increase historical click-through rates of the rich information service 1 and the rich information service 2

FIG. 12

FIG. 13

Obtain a plurality of to-be-recommended services when a first condition is met $\diagup$ 1401

Select, based on historical click-through rates of the to-be-recommended services and sizes of display areas included in a plurality of candidate patterns, a target pattern from the plurality of candidate patterns for display $\diagup$ 1402

FIG. 14

FIG. 15a

FIG. 15b

FIG. 15c

FIG. 15d

FIG. 16

## INTERNATIONAL SEARCH REPORT

| International application No. |
| --- |
| **PCT/CN2022/083334** |

| A. | CLASSIFICATION OF SUBJECT MATTER |
| --- | --- |

G06F 16/9535(2019.01)i

According to International Patent Classification (IPC) or to both national classification and IPC

| B. | FIELDS SEARCHED |
| --- | --- |

Minimum documentation searched (classification system followed by classification symbols)

G06F; H04M

Documentation searched other than minimum documentation to the extent that such documents are included in the fields searched

Electronic data base consulted during the international search (name of data base and, where practicable, search terms used)

CNTXT; WPABSC; ENTXT; WPABS; DWPI; ENTXTC; CNKI: 推荐, 建议, 服务, 应用, app, 程序, 显示, 展示, 可视化, 大小, 尺寸, 大于, 小于, 图标, 卡片, 窗口, 控件, 组件, 标识, 模板, 模版, 版式, 板式, 布局, 富信息, 直达, recommend+, suggest+, service, application?, show+, display+, size, larger, greater, bigger, smaller, less, card?, icon?, widget?, window?, control, element, template, format, layout, rich information, direct service

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 113609399 A (HUAWEI TECHNOLOGIES CO., LTD.) 05 November 2021 (2021-11-05) claims 1-31 | 1-31 |
| Y | CN 111182145 A (HUAWEI TECHNOLOGIES CO., LTD.) 19 May 2020 (2020-05-19) description, paragraphs 3-177, and figures 5-13 | 1-31 |
| Y | CN 110855826 A (HUAWEI TECHNOLOGIES CO., LTD.) 28 February 2020 (2020-02-28) description, paragraphs 6-127 | 1-31 |
| Y | CN 111738679 A (SHENZHEN TRANSSION HOLDINGS CO., LTD.) 02 October 2020 (2020-10-02) description, paragraphs 5-138 | 1-31 |
| A | CN 109345324 A (SHENZHEN ONECONNECT TECHNOLOGY CO., LTD.) 15 February 2019 (2019-02-15) entire document | 1-31 |
| A | CN 111566690 A (HUAWEI TECHNOLOGIES CO., LTD.) 21 August 2020 (2020-08-21) entire document | 1-31 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 June 2022** | **13 June 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2022/083334** |

**C.    DOCUMENTS CONSIDERED TO BE RELEVANT**

| Category* | Citation of document, with indication, where appropriate, of the relevant passages | Relevant to claim No. |
|---|---|---|
| A | CN 111651692 A (TENCENT TECHNOLOGY (BEIJING) CO., LTD.) 11 September 2020 (2020-09-11)<br>entire document | 1-31 |
| A | CN 112241867 A (BEIJING XIAOMI MOBILE SOFTWARE CO., LTD.) 19 January 2021 (2021-01-19)<br>entire document | 1-31 |
| A | CN 111752647 A (XI'AN OUSIQI SOFTWARE CO., LTD.) 09 October 2020 (2020-10-09)<br>entire document | 1-31 |
| A | CN 104679536 A (SONY CORPORATION) 03 June 2015 (2015-06-03)<br>entire document | 1-31 |
| A | US 2017098144 A1 (YAHOO! INC.) 06 April 2017 (2017-04-06)<br>entire document | 1-31 |

Form PCT/ISA/210 (second sheet) (January 2015)

INTERNATIONAL SEARCH REPORT
Information on patent family members

International application No.

**PCT/CN2022/083334**

| Patent document cited in search report | | | Publication date (day/month/year) | Patent family member(s) | | | Publication date (day/month/year) |
|---|---|---|---|---|---|---|---|
| CN | 113609399 | A | 05 November 2021 | None | | | |
| CN | 111182145 | A | 19 May 2020 | WO | 2021129688 | A1 | 01 July 2021 |
| CN | 110855826 | A | 28 February 2020 | WO | 2021057452 | A1 | 01 April 2021 |
| CN | 111738679 | A | 02 October 2020 | None | | | |
| CN | 109345324 | A | 15 February 2019 | CN | 109345324 | B | 12 March 2021 |
| CN | 111566690 | A | 21 August 2020 | US | 2021035244 | A1 | 04 February 2021 |
| | | | | WO | 2019183788 | A1 | 03 October 2019 |
| | | | | EP | 3761257 | A1 | 06 January 2021 |
| | | | | EP | 3761257 | A4 | 27 January 2021 |
| CN | 111651692 | A | 11 September 2020 | None | | | |
| CN | 112241867 | A | 19 January 2021 | EP | 3767564 | A1 | 20 January 2021 |
| | | | | US | 2021018958 | A1 | 21 January 2021 |
| | | | | IN | 202024002001 | A | 22 January 2021 |
| CN | 111752647 | A | 09 October 2020 | None | | | |
| CN | 104679536 | A | 03 June 2015 | WO | 2015079331 | A1 | 04 June 2015 |
| | | | | US | 2016170575 | A1 | 16 June 2016 |
| | | | | EP | 3074861 | A1 | 05 October 2016 |
| US | 2017098144 | A1 | 06 April 2017 | WO | 2017062256 | A1 | 13 April 2017 |
| | | | | US | 9767400 | B2 | 19 September 2017 |

Form PCT/ISA/210 (patent family annex) (January 2015)

**EP 4 336 383 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110604199
- CN 202110963155